# EUROPEAN PATENT APPLICATION

(11) **EP 1 454 528 A1**
(43) Date of publication of application: **08.09.2004**
(21) Application number: 03027085.4
(22) Date of filing: 25.11.2003
(51) Int. Cl.: A01N 25/26, A01N 51/00, A01N 43/90

(54) **Pesticidal composition and process for producing coated solid pesticides**

(30) Priority: 07.03.2003 EP 03005180
(71) Applicant: Syngenta Participations AG, 4058 Basel (CH)
(72) Inventor: The designation of the inventor has not yet been filed
(74) Representative: Bastian, Werner et al

(57) **Abstract**

The instant invention relates to a pesticidal composition and to a process for producing coated solid pesticides. Said pesticidal composition and process for the coating of a solid pesticide formulation with thermoplastic polymers comprise the steps of
a) charging said solid pesticide formulation into the drum of a pan coater equipped with at least one spraying nozzle, with at least one gas inlet and with at least one gas outlet
b) spraying a mixture of at least one solvent and at least one thermoplastic polymer emulsified therein through said spraying nozzle during the operation of the pan coater and simultaneously blowing a gas through said gas inlet into the drum.

The process according to the instant invention enables the production of coated solid pesticides in a very simple process, without requiring any manual intervention during the operation, and yields coated solid pesticides with excellently uniform coating layers and having extraordinarily well controlled release property of active ingredients.

## Description

The instant invention relates to a pesticidal composition and to a process for producing coated solid pesticides.

Coated solid pesticides are well known in the art, being usually applied for controlling the release rate of their active ingredients as described for example in PCT WO 99/44421 and PCT WO 02/05641. The coated solid pesticides disclosed in PCT WO 99/44421 and in PCT WO 02/05641 exhibit good property of releasing their active ingredients. However, the process for formulating coated pesticides according to the inventions disclosed in these PCT applications is rather complicated requiring a plurality of steps with manual intervention and, moreover, the quality of the layers formed by this process on the surface of solid pesticide particles is still not high enough for achieving necessary release control of active ingredients from the solid pesticide.

The coated solid pesticides according to the invention can be used to control harmful pests and weeds, and to regulate plants' growth in various fields such as paddy and upland farmland, orchard, pasture, turf field, forest, waterway and the other non-crop land. Basically depending on weather condition, application timing, application method, soil condition, targeted pests and weeds, and the composition's shape, any known application method will be acceptable. For example, direct spraying application into paddy water or upland farm, seedling box application for rice or other crops, and soil application will be given.

It has now been surprisingly found that a process for producing coated solid pesticides using a pan coater unexpectedly yields coated solid pesticides with excellently uniform coating structure and, consequently, with extraordinarily well controlled release property of the active ingredients.

The instant invention therefore relates to a process for producing a coated solid pesticide comprising solid pesticide particles comprising at least one pesticidal active ingredient, at least one inert carrier and at least one surfactant and formulated into granules or powder, which granules or powder are coated with at least one thermoplastic polymer, comprising the steps of:
(1) charging solid pesticide particles comprising at least one pesticidal active ingredient, at least one inert carrier and at least one surfactant and formulated into granules or powder in the drum of a pan coater equipped with at least one spraying nozzle and at least one gas inlet; and
(2) spraying a mixture of at least one solvent and at least one thermoplastic polymer emulsified therein through said spraying nozzle during the operation of the pan coater and simultaneously blowing a gas through said gas inlet into the drum.

The pan coater to be used in the instant invention is a commercially available pan coater, usually used in the pharmaceutical industry. Such a pan coater can be exemplified by Dria Coater DRC-1200DS manufactured by Powrex Corporation.

The spraying nozzle is preferably placed over the solid pesticide particles to be coated in the drum of said pan coater. The gas inlet, which can be a tube with a hole or a tube with a plurality of holes is in general located at the bottom of the drum of said pan coater. The gas inlet is preferably realised by a perforated drum through which gas is continuously blown. The pan coater is equipped with a gas outlet, which allows continuous gas flow from inlet to outlet. The position of the gas outlet is not critical. The gas outlet is located preferably at the top of the pan coater

The gas is blown through the perforated drum against the solid pesticide particles. Said gas allows to remove the moisture caused by the sprayed mist and the moisture on the surface of the sprayed solid pesticide particles. The gas is exhausted from the top of the rotating drum. The gas flow in the drum is not limitative.

The gas according to the instant invention can be every gas which is inert under the process conditions e.g. nitrogen or air. The most preferred gas is air.
The temperature of the gas blown is usually 25-95°C, preferably 25-75°C, more preferably 25-70°C, and most preferred 30-70°C.

At least one solvent is used for emulsifying the thermoplastic polymer. Suitable solvents are water or organic solvents e.g. an alcohol, a ketone, an amine or an organic acid or mixtures thereof. A surfactant and/or other commercially available additives can be used for the preparation of the polymer emulsions to obtain a mixture, in which the thermoplastic polymer is emulsified. The most prefered solvent is water.

The process according to the instant invention allows also the preparation of pesticidal compositions comprising at least two solid particle formulations, said formulations each comprising at least one pesticide, at least one inert carrier and at least one surfactant, characterized in that the pesticide release rates of at least two said solid particle formulations are different from each other. Said formulation represents therefore a further object of the present invention.

The advantageous properties of said controlled release formulation can also be achieved by using of known coating technologies, e.g. with a onion pan or with a concrete mixer customarily used in construction engineering, but the use of the process according to the present invention is especially preferred in order to get a coating of high quality.

A further object of the instant invention is the preparation of a pesticidal composition comprising at least two solid particle formulations, said formulations each comprising at least one pesticide at least one inert carrier and at least one surfactant, characterized in that, at least one of said solid particle formulation is coated with a thermoplastic polymer and the pesticide release rates of at least two said solid particle formulations are different from each other.
The pesticidal active ingredients to be used in the solid pesticide particles of the instant invention include herbicides, fungicides, insecticides and plant growth regulators.

As herbicides there are for example Oxadiazon, Pentoxazone, Carfentrazone-Ethyl, Oxadiargyl, Pyrachlonil, Butachlor, Pretilachlor, Thenylchlor, Piprerophos, Benslide, Butamifos, Anilofos, Thiobencarb, Molinate, Esprocarb, Dimepimerate, Pyributicarb, Cafenstrole, Indanofan, Mefenacet, Fentrazamide, Etobenzanid, Dithiopyr, Oxaziclomefon, Cinmethylin, Pyriminobac-Methyl, Pyriftalid, Cyhalofop-Butyl, Metamifop, Daimuron, Cumyluron, Bromobutide, Benfuresate. Bensulfuron-Methyl, Azimsulfuron, Pyrazosulfuron-Ethyl, Cinosulfuron, Imazosulfuron, Cyclosulfamuron, Ethoxysulfuron, Halosulfuron-Methyl, Pyrazolate, Pyrazoxyfen, Benzofenap, Benzobicyclon, Naproanilide, Clomeprop, MCP, MCPB, Phenothiol, Bentazon, Simetryn, Prometryn, Dimethametryn, Quinoclamine, Paraquat, Diquat, Glyphosate potasium, Butafenacil, Glyphosate isopropylamine, Glyphsate ammonium, Glyphosate sodium, Glufosinate, Bialaphos, DCMU, 2,4-D, MCPA, Trifloxysulfuron-sodium, Tetrapion, Imazapyr, Terbacil, Bromacil, DBN, Triflurarin, Pendimethalin, Isouron, DCBN, Asuram, Carbutilate, Pyraflufen-ethyl, Flumioxazin, Azafenizin, Atrazin, Simazin, Terbutryn, Ametryn, Foramsulfuron, Trifloxysulfuron, Metolachlor, S-Metolachlor, Alachlor, Acetochlor, Flufenacet, Dimethenamid, S-Dimethenamid, Pethoxamid, Flumetsulam, Metosulam, Pyridate, Pyridafol, Dicamba und seine Salze, Procarbazone, Fluthiacet, Imazamox, Imazethapyr, Nicosulfuron, Primisulfuron-methyl, Rimsulfuron, Halosulfuron, Cloransulam, Clomazone, Diclosulam, 2.4-D, Florasulam, Flumiclorac, Bromoxynil, Sethoxidim, loxynil, Tepraloxydim, Carfentrazone, Clethodim, Sulfentrazone, Imazaquin, Sulcotrione, Mesotrione, Thifensulfuron, Isoxaflutole, Prosulfuron, Isoxachlortole, lodosulfuron, Prohexadione, Diflufenzopyr, Flurtamone, Butylate, Flumioxacin, Benzfendizone, Isopropazol, Fluazolate, Aclonifen, Tritosulfuron, Cinidon-Ethyl, Glyphosate and its salts, in particular ammonium salt, isopropylammonium salt, sodium salt, potassium salt, diammonium salt or trimesium salt, Ketospiradox und Azafenidin, Tralkoxydim, Triasulfuron, the compounds of formula 2.5 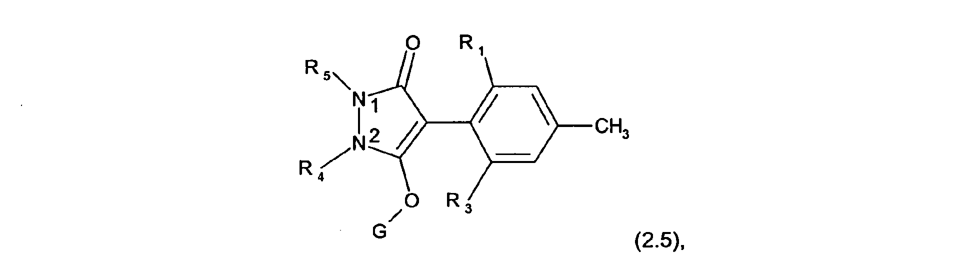 wherein
R₁ and R₃ are, each independently of the other, halogen, nitro, cyano, C₁-C₄alkyl, C₂-C₄-alkenyl, C₂-C₄alkynyl, C₁-C₄haloalkyl, C₂-C₆haloalkenyl, C₃-C₆cycloalkyl, halo-substituted C₃-C₆cycloalkyl, C₂-C₆alkoxyalkyl, C₂-C₆alkylthioalkyl, hydroxy, mercapto, C₁-C₆alkoxy, C₃-C₆alkenyloxy, C₃-C₆alkynyloxy, carbonyl, carboxyl, C₁-C₄alkylcarbonyl, C₁-C₄hydroxyalkyl, C₁-C₄alkoxycarbonyl, C₁-C₄alkylthio, C₁-C₄alkylsulfinyl, C₁-C₄alkylsulfonyl, amino, C₁-C₄alkylamino or di(C₁-C₄alkyl)amino;
R₄ and R₅ together are a group

-C-R₆(R₇)-O-C-R₈(R₉)-C-R₁₀(R₁₁)-C-R₁₂(R₁₃)- (Z₁),

-C-R₁₄(R₁₅)-C-R₁₆(R₁₇)-O-C-R₁₈(R₁₉)-C-R₂₀(R₂₁)- (Z₂),

or

-C-R₂₂(R₂₃)-C-R₂₄(R₂₅)-C-R₂₆(R₂₇)-O-C-R₂₈(R₂₉)- (Z₃),

wherein R₆, R₇, R₈, R₉, R₁₀, R₁₁, R₁₂, R₁₃, R₁₄, R₁₅, R₁₆, R₁₇, R₁₈, R₁₉, R₂₀, R₂₁, R₂₂, R₂₃, R₂₄, R₂₅, R₂₆, R₂₇, R₂₈ and R₂₉ are, each independently of the others, hydrogen, halogen, C₁-C₄-alkyl or C₁-C₄haloalkyl, it being possible for an alkylene ring, which together with the carbon atoms of the groups Z₁, Z₂ or Z₃ contains from 2 to 6 carbon atoms and which may be interrupted by oxygen, to be either fused or spire-bound to the carbon atoms of the groups Z₁, Z₂ or Z₃, or that alkylene ring bridges at least one ring atom of the groups Z₁, Z₂ or Z₃; G is hydrogen, -C(X₁)-R₃₀, -C(X₂)-X₃-R₃₁, -C(X₄)-N(R₃₂)-R₃₃. -SO₂-R₃₄, an alkali metal, alkaline earth metal, sulfonium or ammonium cation, or -P(X₅)(R₃₅)-R₃₆ or -CH₂-X₆-R₃₇; X₁, X₂, X₃, X₄, X₅ and X₆ are, each independently of the others, oxygen or sulfur; R₃₀, R₃₁, R₃₂ and R₃₃ are, each independently of the others, hydrogen, C₁-C₁₀alkyl, C₁-C₁₀-haloalkyl, C₁-C₁₀cyanoalkyl, C₁-C₁₀nitroalkyl, C₁-C₁₀aminoalkyl, C₁-C₅alkylamino-C₁-C₅alkyl, C₂-C₈dialkylamino-C₁-C₅alkyl, C₃-C₇cycloalkyl-C₁-C₅alkyl, C₂-C₁₀alkoxy-alkyl, C₄-C₁₀-alkenyloxy-alkyl, C₄-C₁₀alkynyloxy-alkyl, C₂-C₁₀alkylthio-alkyl, C₁-C₅alkysulfoxyl-C₁-C₅alkyl, C₁-C₅alkylsulfonyl-C₁-C₅alkyl, C₂-C₈alkylideneamino-oxy-C₁-C₅alkyl, C₁-C₅alkylcarbonyl-C₁-C₅alkyl, C₁-C₅alkoxycarbonyl-C₁-C₅alkyl, C₁-C₅amino-carbonyl-C₁-C₅alkyl, C₂-C₈dialkylamino-carbonyl-C₁-C₅alkyl, C₁-C₅alkylcarbonylamino-C₁-C₅alkyl, C₂-C₅alkylcarbonyl-(C₁-C₅alkyl)-aminoalkyl, C₃-C₆trialkylsilyl-C₁-C₅alkyl, phenyl-C₁-C₅alkyl, heteroaryl-C₁-C₅alkyl, phenoxy-C₁-C₅alkyl, heteroaryloxy-C₁-C₅alkyl, C₂-C₅alkenyl, C₂-C₅haloalkenyl, C₃-C₈cycloalkyl, phenyl, or C₁-C₃alkyl-, C₁-C₃haloalkyl-, C₁-C₃alkoxy-, C₁-C₃haloalkoxy-, halo-, cyano- or nitro-substituted phenyl or heteroaryl or heteroarylamino, C₁-C₃alkyl-, C₁-C₃haloalkyl-, C₁-C₃-alkoxy-, C₁-C₃haloalkoxy-, halo-, cyano- or nitro-substituted heteroarylamino, diheteroarylamino, C₁-C₃alkyl-, C₁-C₃haloalkyl-, C₁-C₃alkoxy-, C₁-C₃haloalkoxy-, halo-, cyano- or nitro-substituted diheteroarylamino, phenylamino, C₁-C₃alkyl-, C₁-C₃haloalkyl-, C₁-C₃alkoxy-, C₁-C₃haloalkoxy-, halo-, cyano- or nitro-substituted phenylamino, diphenylamino, C₁-C₃alkyl-, C₁-C₃haloalkyl-, C₁-C₃alkoxy-, C₁-C₃haloalkoxy-, halo-, cyano- or nitro-substituted diphenylamino, C₃-C₇cycloalkylamino, C₁-C₃alkyl-, C₁-C₃haloalkyl-, C₁-C₃alkoxy-, C₁-C₃haloalkoxy-, halo-, cyano- or nitro-substituted C₃-C₇cycloalkylamino, di-C₃-C₇cycloalkylamino, C₁-C₃alkyl-, C₁-C₃haloalkyl-, C₁-C₃alkoxy-, C₁-C₃haloalkoxy-, halo-, cyano- or nitro-substituted di-C₃-C₇-cycloalkylamino, C₃-C₇cycloalkoxy or C₁-C₃alkyl-, C₁-C₃haloalkyl-, C₁-C₃alkoxy-, C₁-C₃haloalkoxy-, halo-, cyano- or nitro-substituted C₃-C₇cycloalkoxy; R₃₄, R₃₅ and R₃₆ are, each independently of the others, hydrogen, C₁-C₁₀alkyl, C₁-C₁₀haloalkyl, C₁-C₁₀cyanoalkyl, C₁-C₁₀nitroalkyl, C₁-C₁₀aminoalkyl, C₁-C₅alkylamino-C₁-C₅alkyl, C₂-C₈dialkylamino-C₁-C₅alkyl, C₃-C₇cycloalkyl-C₁-C₅alkyl, C₂-C₁₀alkoxy-alkyl, C₄-C₁₀-alkenyloxy-alkyl, C₄-C₁₀alkynyloxy-alkyl, C₂-C₁₀alkylthio-alkyl, C₁-C₅alkysulfoxyl-C₁-C₅alkyl, C₁-C₅alkylsulfonyl-C₁-C₅alkyl, C₂-C₈alkylideneamino-oxy-C₁-C₅alkyl, C₁-C₅alkylcarbonyl-C₁-C₅alkyl, C₁-C₅alkoxycarbonyl-C₁-C₅alkyl, C₁-C₅amino-carbonyl-C₁-C₅alkyl, C₂-C₅dialkylamino-carbonyl-C₁-C₅alkyl, C₁-C₅alkylcarbonylamino-C₁-C₅alkyl, C₂-C₅alkylcarbonyl-(C₁-C₅alkyl)-aminoalkyl, C₃-C₆trialkylsilyl-C₁-C₅alkyl, phenyl-C₁-C₅alkyl, heteroaryl-C₁-C₅alkyl, phenoxy-C₁-C₅alkyl, heteroaryloxy-C₁-C₅alkyl, C₂-C₅alkenyl, C₂-C₅haloalkenyl, C₃-C₈cycloalkyl, phenyl, or C₁-C₃alkyl-, C₁-C₃haloalkyl-, C₁-C₃alkoxy-, C₁-C₃haloalkoxy-, halo-, cyano- or nitro-substituted phenyl or heteroaryl or heteroarylamino, C₁-C₃alkyl-, C₁-C₃haloalkyl-, C₁-C₃-alkoxy-, C₁-C₃haloalkoxy-, halo-, cyano- or nitro-substituted heteroarylamino, diheteroarylamino, C₁-C₃alkyl-, C₁-C₃haloalkyl-, C₁-C₃alkoxy-, C₁-C₃haloalkoxy-, halo-, cyano- or nitro-substituted diheteroarylamino, phenylamino, C₁-C₃alkyl-, C₁-C₃haloalkyl-, C₁-C₃alkoxy-, C₁-C₃haloalkoxy-, halo-, cyano- or nitro-substituted phenylamino, diphenylamino, C₁-C₃alkyl-, C₁-C₃haloalkyl-, C₁-C₃alkoxy-, C₁-C₃haloalkoxy-, halo-, cyano- or nitro-substituted diphenylamino, C₃-C₇cycloalkylamino, C₁-C₃alkyl-, C₁-C₃haloalkyl-, C₁-C₃alkoxy-, C₁-C₃haloalkoxy-, halo-, cyano- or nitro-substituted C₃-C₇cycloalkylamino, di-C₃-C₇cycloalkylamino, C₁-C₃alkyl-, C₁-C₃haloalkyl-, C₁-C₃alkoxy-, C₁-C₃haloalkoxy-, halo-, cyano- or nitro-substituted di-C₃-C₇-cycloalkylamino, C₃-C₇cycloalkoxy, C₁-C₃alkyl-, C₁-C₃haloalkyl-, C₁-C₃alkoxy-, C₁-C₃haloalkoxy-, halo-, cyano- or nitro-substituted C₃-C₇cycloalkoxy, C₁-C₁₀alkoxy, C₁-C₁₀haloalkoxy, C₁-C₅alkylamino, C₂-C₈dialkylamino and benzyloxy or phenoxy, it being possible for the benzyl and phenyl groups themselves to be substituted by C₁-C₃alkyl, C₁-C₃haloalkyl, C₁-C₃-alkoxy, C₁-C₃haloalkoxy, halogen, cyano, formyl, acetyl, propionyl, carboxyl, C₁-C₅alkoxycarbonyl, methylthio, ethylthio or by nitro;and R₃₇ is C₁-C₁₀alkyl, C₁-C₁₀haloalkyl, C₁-C₁₀cyanoalkyl, C₁-C₁₀nitroalkyl, C₁-C₁₀aminoalkyl, C₁-C₅alkylamino-C₁-C₅alkyl, C₂-C₈dialkylamino-C₁-C₅alkyl, C₃-C₇cycloalkyl-C₁-C₅alkyl, C₂-C₁₀alkoxy-alkyl, C₄-C₁₀alkenyloxy-alkyl, C₄-C₁₀alkynyloxy-alkyl, C₂-C₁₀alkylthio-alkyl, C₁-C₅alkysulfoxyl-C₁-C₅alkyl, C₁-C₅alkylsulfonyl-C₁-C₅alkyl, C₂-C₈alkylideneamino-oxy-C₁-C₅alkyl, C₁-C₅alkylcarbonyl-C₁-C₅alkyl, C₁-C₅alkoxycarbonyl-C₁-C₅alkyl, C₁-C₅amino-carbonyl-C₁-C₅alkyl, C₂-C₈dialkylamino-carbonyl-C₁-C₅alkyl, C₁-C₅alkylcarbonylamino-C₁-C₅alkyl, C₂-C₅alkylcarbonyl-(C₁-C₅alkyl)-aminoalkyl, C₃-C₆trialkylsilyl-C₁-C₅alkyl, phenyl-C₁-C₅alkyl, heteroaryl-C₁-C₅alkyl, phenoxy-C₁-C₅alkyl, heteroaryloxy-C₁-C₅alkyl, C₂-C₅alkenyl, C₂-C₅haloalkenyl, C₃-C₈cycloalkyl, phenyl, or C₁-C₃alkyl-, C₁-C₃haloalkyl-, C₁-C₃alkoxy-, C₁-C₃haloalkoxy-, halo-, cyano- or nitro-substituted phenyl or heteroaryl, or heteroarylamino, C₁-C₃alkyl-, C₁-C₃haloalkyl-, C₁-C₃alkoxy-, C₁-C₃haloalkoxy-, halo-, cyano- or nitro-substituted heteroarylamino, diheteroarylamino, C₁-C₃alkyl-, C₁-C₃haloalkyl-, C₁-C₃alkoxy-, C₁-C₃haloalkoxy-, halo-, cyano- or nitro-substituted diheteroarylamino, phenylamino, C₁-C₃alkyl-, C₁-C₃haloalkyl-, C₁-C₃alkoxy-, C₁-C₃haloalkoxy-, halo-, cyano- or nitro-substituted phenylamino, diphenylamino, C₁-C₃alkyl-, C₁-C₃haloalkyl-, C₁-C₃alkoxy-, C₁-C₃haloalkoxy-, halo-, cyano- or nitro-substituted diphenylamino, C₃-C₇cycloalkylamino, C₁-C₃alkyl-, C₁-C₃haloalkyl-, C₁-C₃alkoxy-, C₁-C₃haloalkoxy-, halo-, cyano- or nitro-substituted C₃-C₇cycloalkylamino, di-C₃-C₇cycloalkylamino, C₁-C₃alkyl-, C₁-C₃haloalkyl-, C₁-C₃alkoxy-, C₁-C₃haloalkoxy-, halo-, cyano- or nitro-substituted di-C₃-C₇cycloalkylamino, C₃-C₇cycloalkoxy, C₁-C₃alkyl-, C₁-C₃haloalkyl-, C₁-C₃alkoxy-, C₁-C₃haloalkoxy-, halo-, cyano- or nitro-substituted C₃-C₇cycloalkoxy or C₁-C₁₀alkylcarbonyl; and salts and diastereoisomers of the compounds of formula I, and Clodinafop-propargyl, Mesosulfuron, Prosulfocarb, Picolinafen, Beflubutamid, Fenoxaprop-P-ethyl, Diclofop-methyl, Amidosulfuron, Flupyrsulfuron, Flupyrsulfuron-methyl-sodium, Metsulfuron-methyl, Sulfosulfuron, Tribenuron-methyl, Imazamethabenz-methyl, Flucarbazone, Chlorotoluron, Isoproturon, Methabenzthiazuron, Bifenox, Fluoroglycofen-ethyl, Diflufenican, Bilanafos, Ethalfluralin, Trifluralin, Fluthiamid, Isoxaben, Triallate, 2,4-DB, Dichlorprop, Mecoprop, MCPP, Mecoprop-P, Clopyralid, Fluroxypyr, Quinmerac, Benazolin-ethyl, Difenzoquat, Quinclorac, Prodiamine, Benefin, Trifluralin, Terbuthylazin, Cyanazin, 6-Chlor-3-phenyl-4-pyridazinol, Flazasulfuron, Metribuzin, , Flurtamone, Asulam, Norflurazon, Thiazopyr, Hexazinone, Diuron, Tebuthiuron and Petoxamid.

The following herbicides are described, for example, in 'The Pesticide Manual', 12th Edition, British Crop Protection Council, 2000:

| Name | Pesticide Manual 12^{th} ed., Entry No.: |
|---|---|
| S-Metolachlor | 530 |
| Metolachlor | 529 |
| Mesotrione | 500 |
| Atrazin | 39 |
| Simazin | 698 |
| Terbutryn | 740 |
| Ametryn | 22 |
| Isoxaflutole | 467 |
| Nicosulfuron | 560 |
| Primisulfuron-methyl | 633 |
| Sulcotrione | 710 |
| Alachlor | 16 |
| Acetochlor | 7 |
| Flufenacet | 362 |
| S-Dimethenamid | 254 |
| Dimethenamid | 254 |
| Flumetsulam | 366 |
| Metosulam | 533 |
| Pyridate | 672 |
| Dicamba | 222 |
| Procarbazone | 541 |
| Glufosinate | 406 |
| Fluthiacet | 385 |
| Imazamox | 439 |
| lmazethapyr | 443 |
| Rimsulfuron | 689 |
| Halosulfuron | 414 |
| Cloransulam | 164 |
| Flumiclorac | 367 |
| Clomazone | 159 |
| Diclosulam | 235 |
| 2.4-D | 205 |
| Florasulam | 351 |
| Bromoxynil | 93 |
| Sethoxidim | 694 |
| loxynil | 455 |
| Tepraloxydim | 735 |
| Carfentrazone | 119 |
| Clethodim | 155 |
| Sulfentrazone | 711 |
| Imazaquin | 442 |
| Imazapyr | 441 |
| Mesotrione | 500 |
| Thifensulfuron | 754 |
| Prosulfuron | 657 |
| Bentazon | 69 |
| lodosulfuron | 454 |
| Prohexadione | 639 |
| Diflufenzopyr | 246 |
| Flurtamone | 382 |
| Butylate | 106 |
| Flumioxacin | 368 |
| Fentrazamide | 340 |
| Fluazolate | 355 |
| Aclonifen | 10 |
| Cinidon-Ethyl | 152 |
| Glyphosate | 407 |
| Paraquat | 592 |
| Azafenidin | 43 |
| Terbuthylazine | 739 |
| Cyanazin | 181 |
| Ethoxysulfuron | 307 |
| Flazasulfuron | 349 |
| Pendimethalin | 599 |
| Butafenacil | 99 |
| 2,4-D | 205 |
| Flurtamone | 382 |
| Flumioxazin | 368 |
| Asulam | 38 |
| Norflurazon | 566 |
| Terbacil | 736 |
| Thiazopyr | 752 |
| Hexazinone | 428 |
| Diuron | 276 |
| Tebuthiuron | 729 |

The following herbicides are described, for example, in 'The e-Pesticide Manual', 12th Edition, British Crop Protection Council, 2002, version2.2, under the entry numbers added in brackets: Tralkoxydim (767), Triasulfuron (773), Clodinafop-propargyl (156), Mesosulfuron-methyl (new).

Isopropazol (5-[4-Bromo-1-methyl-5-(trifluoromethyl)-1H-pyrazol-3-yl]-2-chloro-4-fluoro-benzoic acid-isopropylester) is known from Moss, S. R. and M. Rooke S. 1997. Activity of JV 485, a protoporphyrinogen oxidase inhibitor, on herbicide-resistant black-grass (Alopecurus myosuroides). *1997 Brighton crop protection conference: weeds. Proceedings of an international conference, Brighton, UK, 17-20 November 1997*. **1:** 337-342. Pethoxamid (2-Chloro-*N*-(2-ethoxyethyl)-*N*-(2-methyl-1-phenylprop-1-enyl)acetamid) ist described for example in EP-A-0 206 251.

### Benzfendizone

(2-(5-Ethyl-2-{4-[1,2,3,6-tetrahydro-3-methyl-2,6-dioxo-4-(trifluoromethyl)pyrimidin-1-yl]pheno xymethyl}phenoxy)propionic acid-ethylester is registred in the Chemical Abstracts under No. 158755-95-4.

Petoxamid (2-Chloro-*N*-(2-ethoxyethyl)-*N*-(2-methyl-1-phenylprop-1-enyl)acetamid) is registred in the Chemical Abstracts under No. 106700-29-2.

Pyridafol (6-Chloro-3-phenylpyridazin-4-ol) is registred in the Chemical Abstracts under No. 40020-01-7.

Isoxachlortole (4-Chloro 2-mesylphenyl 5-cyclopropyl-1,2-oxazol-4-yl keton) is registred in the Chemical Abstracts under No. 141112-06-3.

### Tritosulfuron

(*N*-[[[4-Methoxy-6-(trifluoromethyl)-1,3,5-triazin-2-yl]amino]carbonyl]-2-(trifluoromethyl)benzol sulfonamid) is registred under Chemical Abstracts No. 142469-14-5 and is known from EP-A-559814.

Trifloxysulfuron is preferably used in the form of its sodium salt (Chemical Abstracts No. 199119-58-9), particularly in hydrated form as B-Modification as described in WO00/52006.

Glufosinate is used according to the invention in the form of its salts, particularly as the ammonium salt. The L-isomer of Glufosinate is more particularly preferred.

Prohexadione is preferably used as the calcium salt, Procarbazone is preferably used as the sodium salt.

Fluthiacet, Thifensulfuron, lodosulfuron, Cloransulam and Halosulfuron are preferably used in their methylester form.

Carfentrazone is used as ethylester.
Flumiclorac is used as pentylester.

Foramsulfuron is known from WO 95/29899.

Ketospiradox is registred in the Chemical Abstracts under CAS number 192708-91-1. .

6-Chloro-3-phenyl-4-pyridazinol is known from US-A-3,790,571.

Dichlorprop is registred in the Chemical Abstracts under number 15165-67-0.

The compounds of formula 2.5 and its preparation is described in WO 01/17352 . From the compounds of formula 2.5, the following compounds of formula 2.5a given in Table 1 are preferred:

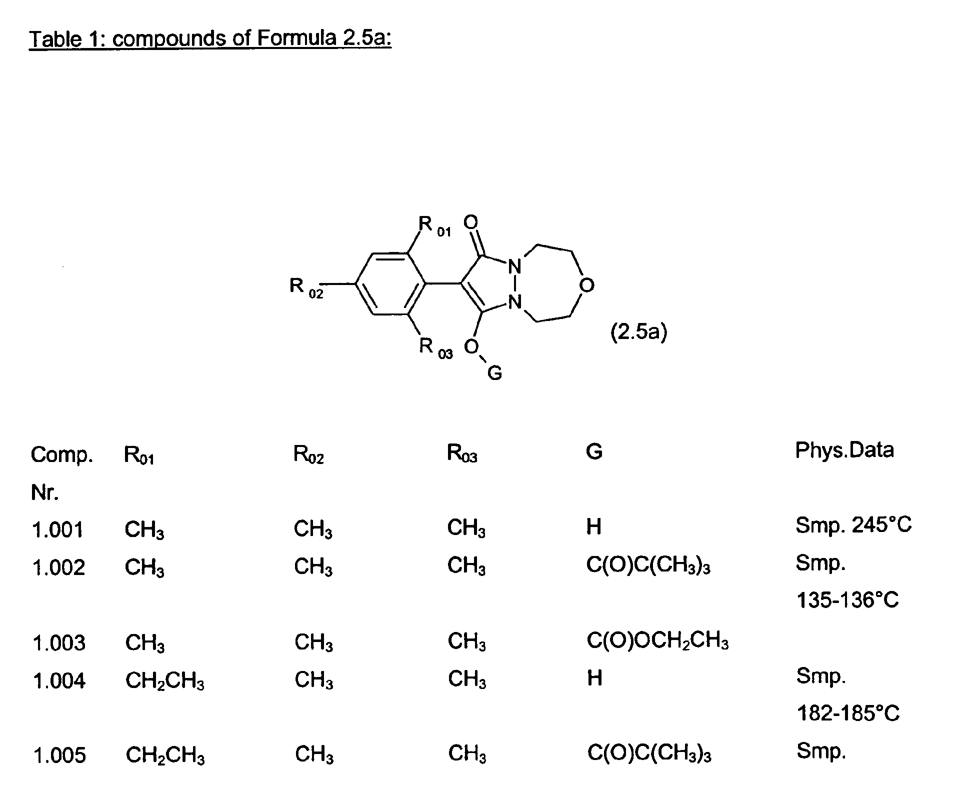

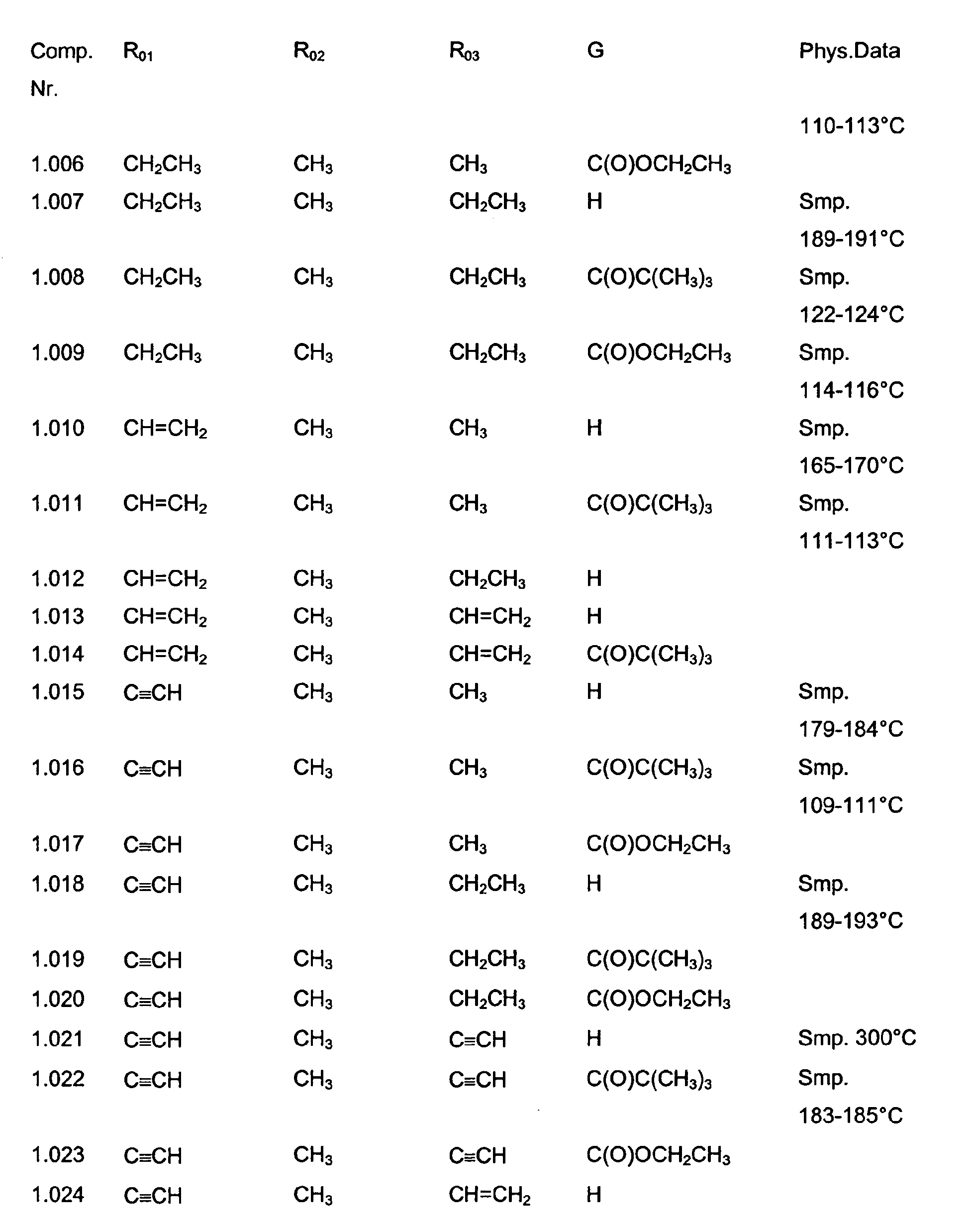

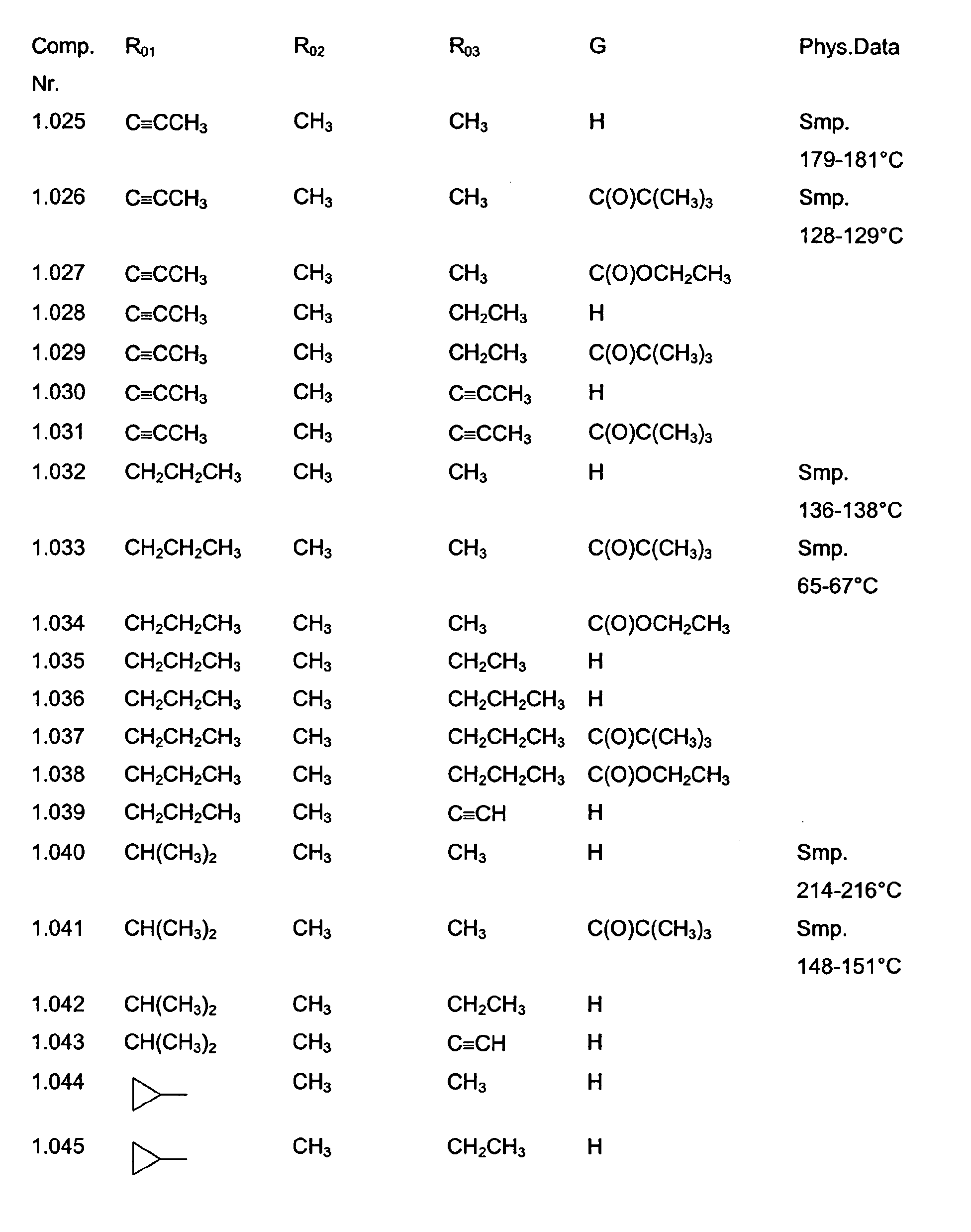

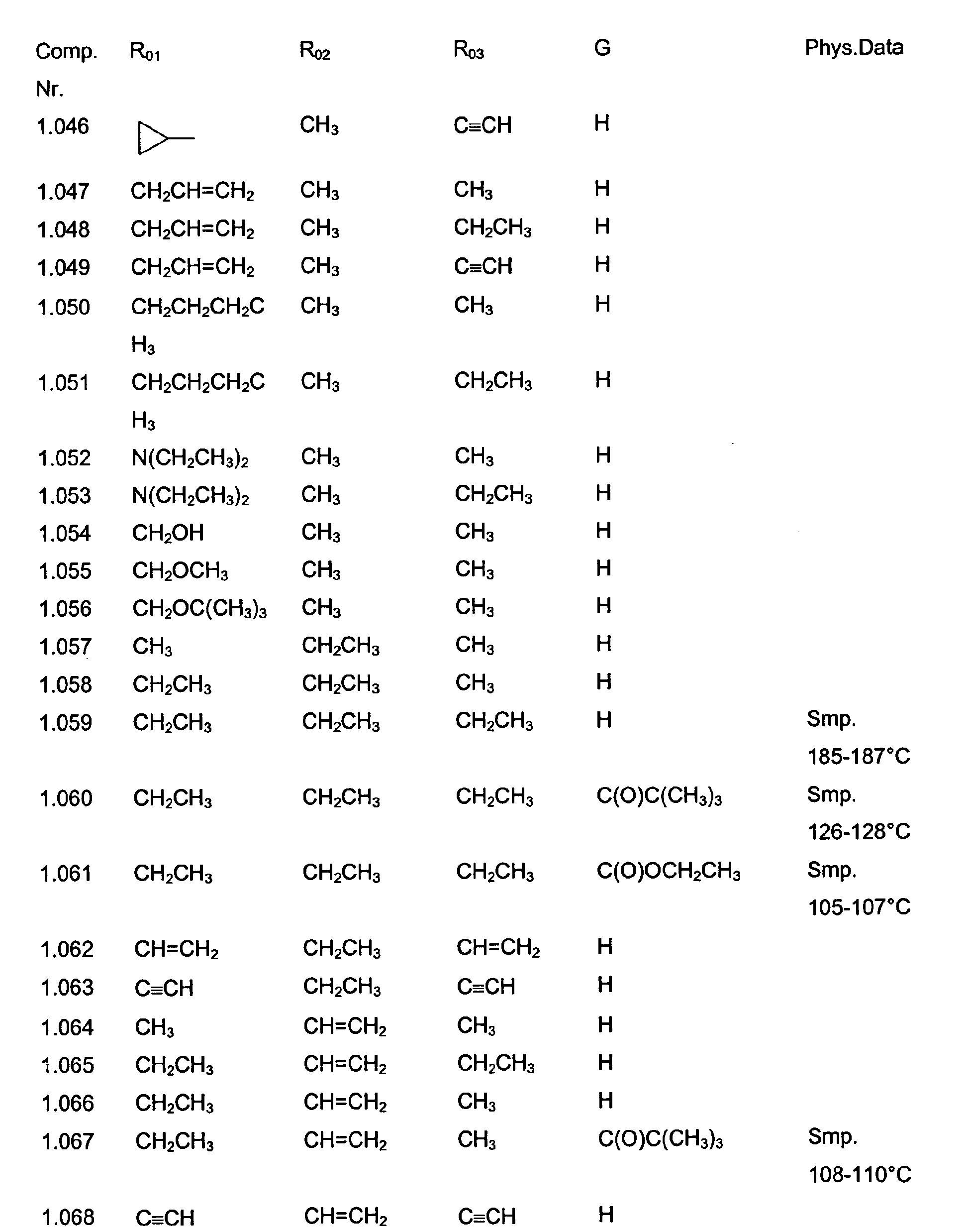

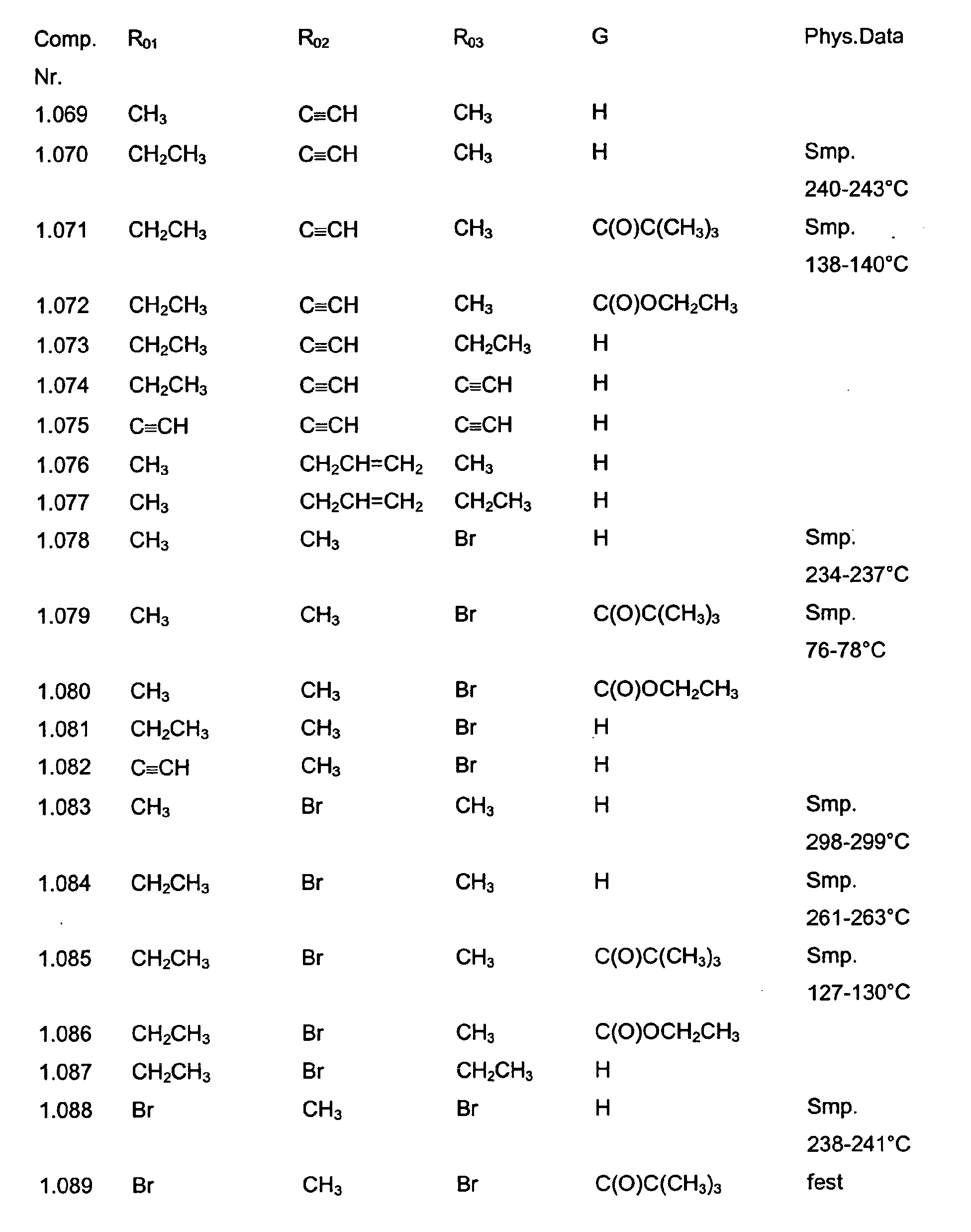

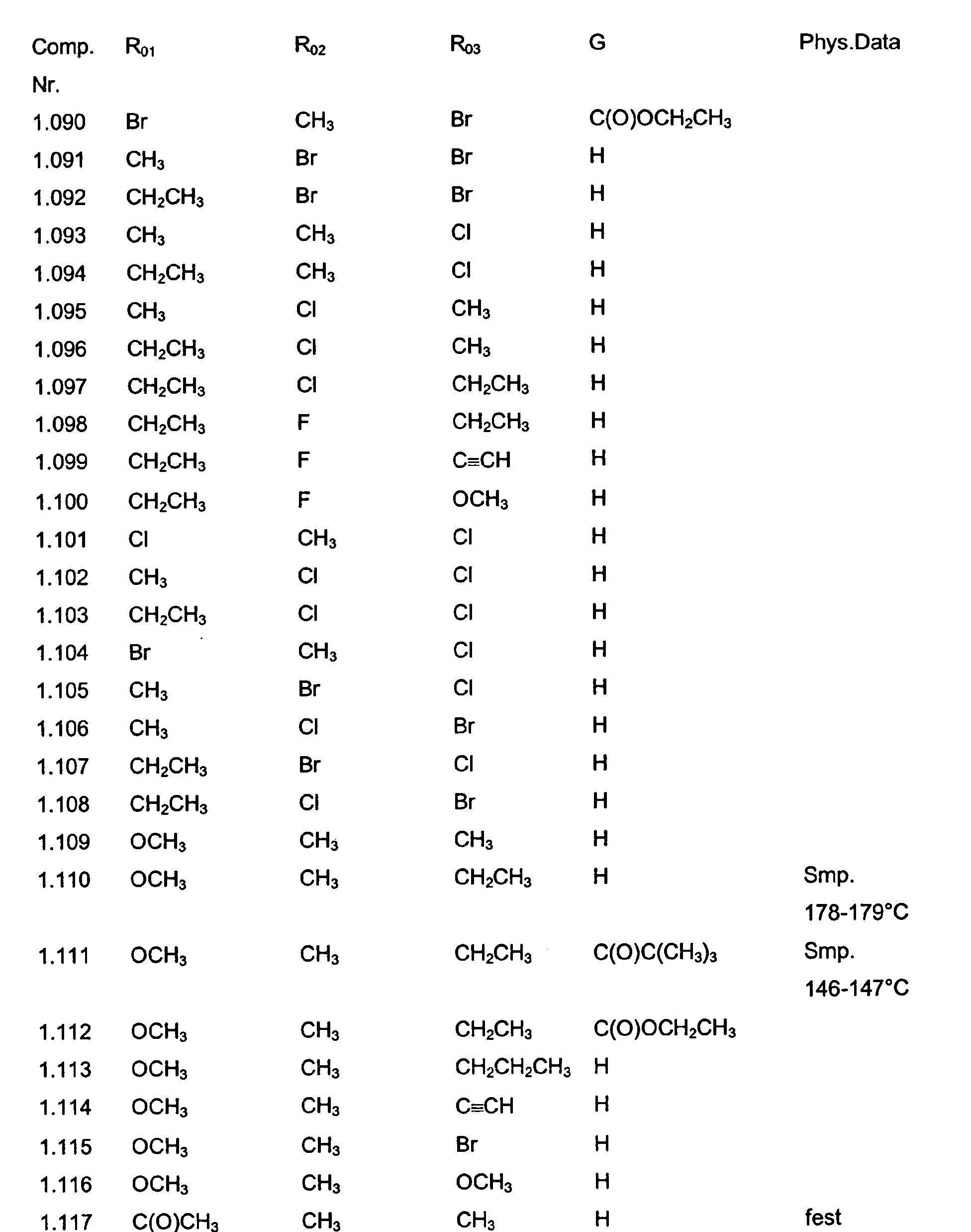

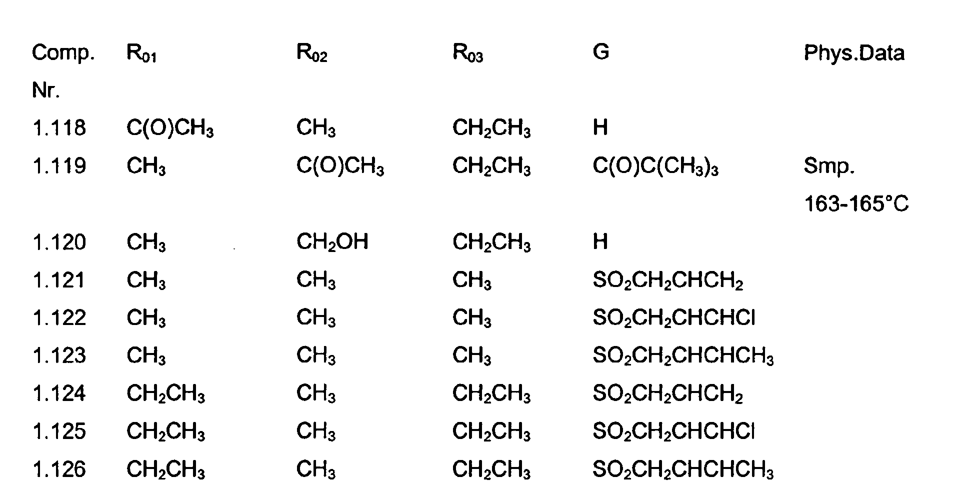

The following compounds are described in the Pesticide Manual, eleventh ed., British Crop Protection Council, 1997:

| Name of the compound | Pesticide Manual eleventh ed., Entry No.: |
|---|---|
| 2.1 (Prometryn) | 597 |
| 2.2 (Tralkoxydim) | 717 |
| 2.3 (Triasulfuron) | 723 |
| 2.6 (Clodinafop-propargyl) | 147 |
| Prosulfocarb | 612 |
| Pyraflufen-Ethyl | 617 |
| Fenoxaprop-P-ethyl | 309 |
| Diclofop-methyl | 219 |
| Amidosulfuron | 21 |
| Flupyrsulfuron | 348 |
| Flupyrsulfuron-methyl-sodium | 348 |
| Metsulfuron-methyl | 498 |
| Sulfosulfuron | 668 |
| Tribenuron-methyl | 728 |
| Imazamethabenz-methyl | 411 |
| Chlorotoluron | 134 |
| Isoproturon | 433 |
| Methabenzthiazuron | 477 |
| Bifenox | 69 |
| Fluoroglycofen-ethyl | 344 |
| Imazosulfuron | 416 |
| Diflufenican | 232 |
| Bilanafos | 71 |
| Ethalfluralin | 279 |
| Trifluralin | 740 |
| Fluthiamid | 51 |
| Isoxaben | 435 |
| Triallate | 722 |
| 2,4-DB | 199 |
| MCPB | 457 |
| Clopyralid | 153 |
| Fluroxypyr | 354 |
| Quinmerac | 636 |
| Benazolin-ethyl | 55 |
| Difenzoquat | 229 |
| Dithiopyr | 259 |
| Quinclorac | 635 |
| Prodiamine | 593 |
| Benefin | 57 |

The following compounds are described in Pesticide Manual, 12th ed., British Crop Protection Council, 2000:

| Compound | Pesticide Manual 12th ed., Entry No.: |
|---|---|
| Picolinafen | 621 |
| Beflubutamid | 57 |
| Flucarbazone | 357 |
| Cyhalofop-butyl | 191 |

Spirodiclofen (3-(2,4-dichlorophenyl)-2-oxo-1-oxaspiro[4.5]dec-3-en-4-yl 2,2-dimethylbutyrat) is known from U. Wachendorff *et al. (Proc. Br. Crop Prot. Conf.* - *Pests Dis.,* 2000, 1, 53).

### Acetoprole

(1-[5-Amino-1-[2,6-dichloro-4-(trifluoromethyl)phenyl]-4-(methylsulfinyl)-1*H*-pyrazol-3-yl]ethan on) is registred in the Chemical Abstracts under Nr. 209861-58-5, Fluacrypyrim (Methy)-(α*E*)-α-(methoxymethylen)-2-[[[2-(1-methylethoxy)-6-trifluoromethyl)-4-pyrimidinyl]ox y]methyl]benzeneacetat is registred in the Chemical Abstracts under Nr. 229977-93-9. Pyridalyl
(2-[3-[2,6-Dichloro-4-[(3,3-dichloro-2-propenyl)oxy]phenoxy]propoxy]-5-(trifluoromethyl)pyridi n) is registred in the Chemical Abstracts under Nr. 179101-81-6, Noviflumuron
(*N*-[[[3,5-dichloro-2-fluoro-4-(1,1,2,3,3,3-hexafluoropropoxy)phenyl]amino]carbonyl]-2,6-difluo robenzamid) is registred in the Chemical Abstracts under Nr. 121451-02-3. Flufenerim (5-Chloro-6-(1-fluoroethyl)-*N*-[2-[4-(trifluoromethoxy)phenyl]ethyl]-4-pyrimidinamin is registred in the Chemical Abstracts under N° 170015-32-4, Amidoflumet (Methyl 5-chloro-2-[[(trifluoromethyl)-sulfonyl]amino]benzoat) is registred in the Chemical Abstracts under Nr. 84466-05-7, Ethiprole
(5-Amino-1-[2,6-dichloro-4-(trifluoromethyl)phenyl]-4-(ethylsulfinyl)-1*H*-pyrazole-3-carbonitril) is registred in the Chemical Abstracts under Nr. 181587-01-9, Acequinocyl
(2-(Acetyloxy)-3-dodecyl-1 ,4-naphthalenedion) is registred in the Chemical Abstracts under Nr. 57960-19-7, Etoxazole
(2-(2,6-Difluorophenyl)-4-[4-(1,1-dimethylethyl)-2-ethoxyphenyl]-4,5-dihydrooxazol) is registred in the Chemical Abstracts under Nr. 153233-91-1, Bifenazate (1-Methylethyl-2-(4-methoxy[1,1'-biphenyl]-3-yl)hydrazincarboxylat) is registred in the Chemical Abstracts under Nr. 149877-41-8 and Spiromesifen (2-Oxo-3-(2,4,6-trimethylphenyl)-1-oxaspiro[4.4]non-3-en-4-yl 3,3-dimethylbutanoat) is registred in the Chemical Abstracts under Nr. 283594-90-1.

As fungicides there are for example Acibenzolar-S-Methyl, Ipconazole, Iprodione, Oxolinic acid, Kasugamycin, Capropamide, Captan, Thiabendazole, Thiuram, Thiophanatemethyl, Organocopper, Tricyclazole, Triflumizole, Varidamycin, Azoxystrobin, Pyroquilon, Fludioxonyl, Prochloraz, Probenazol, Benomil, Metasulfocarb, TPN, Oryzastrobin, Metominostrobin, Benomyl, Carbendazim, Fuberidazole, Thiophanate, Thiophanate-methyl, Chlozolinate, Procymidone, Vinclozolin, Azaconazole, Bitertanol, Bromuconazole, Cyproconazole, Difenoconazole, Diniconazole, Epoxiconazole, Fenarimol, Fenbuconazole, Fluquinconazole, Flusilazole, Flutriafol, Hexaconazole, Imazalil, Imibenconazol, Metconazole, Myclobutanil, Nuarimol, Oxpoconazole, Pefurazoate, Penconazole, Propiconazole, Prothioconazole, Pyrifenox, Simeconazole, Tebuconazole, Tetraconazole, Triadimefon, Triadimenol, Triforine, Triticonazole, Benalaxyl, Furalaxyl, Metalaxyl, Mefenoxam (Metalaxyl-M), Ofurace, Oxadixyl, Aldimorph, Dodemorph Fenpropimorph, Fenpropidin, Spiroxamine, Tridemorph, Edifenphos, Iprobenfos (IBP), Isoprothiolane, Pyrazophos, Benodanil, Carboxin, Fenfuram, Flutolanil, Furametpyr, Mepronil, Oxycarboxin, Thifluzamide, Bupirimate, Dimethirimol, Ethirimol, Cyprodinil, Mepanipyrim, Pyrimethanil, Diethofencarb, Famoxadone, Fenamidone, Kresoxim-methyl, Picoxystrobin, Pyraclostrobin, Trifloxystrobin, Fenpiclonil, Fludioxonil, Quinoxyfen, Biphenyl, Chloroneb, Dicloran, Etridiazole, Quintozene (PCNB), Tecnazene (TCNB), Tolclofos-methyl, Dimethomorph, Carpropamid, Diclocymet, Fenoxanil, Fthalide, Fenhexamid, Polyoxin, Pencycuron, Cyazofamid, Zoxamide, Blasticidin-S, Streptomycin, Validamycin, Cymoxanil, lodocarb, Propamocarb, Prothiocarb, Dinocap, Fluazinam, Fentin acetate, Fentin chloride, Fentin hydroxide, Hymexazole, Octhilinone, Fosetyl-AI, Phosphorsaure, Teclofthalam (bactericide), Triazoxide, Flusulfamide, Ferimzone, Diclomezine, Anilazine, Arsenates, Captafol, Chlorothalonil, Copper (various salts), Copper ammonium carbonat, Copper octanoate, Copperroleat, Copper sulfate, Copper-hydroxide, Dichlofluanid, Dithianon, Dodine, Ferbam, Folpet, Guazatine, Iminoctadine, Mancozeb, Maneb, Mercury, Metiram, Propineb, Sulphur, Thiram, Tolylfluanid, Zineb, Ziram, Benthiavalicarb, Iprovalicarb, Diflumetorim, Ethaboxam, Flusulfamide, Methasulfocarb, Silthiofam, Bacillus pumilus GB34, Bacillus pumilus strain QST 2808, Bacillus subtilis, Bacilus subtilis + PCNB + Metalaxyl, Cadmiumchlorid, Carbondisulfid, Bordeaux Mixture, Cedar, Chlorine, Cinnamaldehyde, Cycloheximide, Fenaminosulf, Fenamiphos, Dichloropropene, Dichlone, Formaldehyde, Gliocladium virens GL-21, Glyodin, Hexachlorobenzene, Iprovalicarb, Manganous dimethyldithiocarbamate, Mercuric chloride, Nabam, Neem oil (Hydrophobischer Extrakt), Oxytetracycline, Oxythioquinox, Paraformaldehyde, Pentachloronitrobenzene, Pentachlorophenol, Petroleumöl, Polyoxin D Zinksalz, Sodium bicarbonat; Potassium bicarbonat; Sodium diacetat; Sodium propionat, TCMTB, Terramycin, Trichoderma, Trichoderma harzianum, Triphenyltin hydroxide, Xanthomonas campestris subsp. vesicatoria, Zinkborat, Zinksulfat, Essigsaure, Aluminum-phosphin and Ampelomyces quisqualis.

The above-listed compounds or organisms producing such compounds are described in Pesticide Manual, 12th ed., British Crop Protection Council, 2000.

As insecticides there are, Imidachloprid, Ethofenprox, Cartap, Thiamethoxam, Bensultap, Benthiocarb, Monocrotofos, Alprocarb, Clothianidin, Dinotefran, Acetamiprid, Thiacloprid, Fipronil, Ethiprole, Abamectin, Acephate, Acrinathrin, Acrylonitrile, Alanycarb, Aldicarb, Aldoxycarb, Aldrin, Allethrin (1*R*-isomers), Allyxycarb, Alpha-cypermethrin, Phosphine (Aluminium Phosphide), Amidithion, Aminocarb, Amiton, Amitraz, Anabasine, Athidathion, Azadirachtin, Azamethiphos, Azinphos-ethyl, Azinphos-methyl, Azothoate, *Bacillus sphaericus, Bacillus thuringiensis, Bacillus thuringiensis* delta endotoxins, Barium polysulfide, Bendiocarb, Benfuracarb, Benzoximate, Beta-cyfluthrin, Beta-cypermethrin, Bifenthrin, Bioallethrin, Bioallethrin *S*-cyclopentenyl isomer, Biopermethrin, Bioresmethrin, Bistrifluron, Borax, Bromfenvinfos, Bromophos, Bromophos-ethyl, Bufencarb, Buprofezin, Butacarb, Butathiofos, Butocarboxim, Butonate, Butoxycarboxim, Cadusafos, Hydrogen cyanide, Calcium polysulfide, Camphechlor, Carbanolate, Carbaryl, Carbofuran, Carbon disulfide, Carbon tetrachloride, Carbophenothion, Carbosulfan, Cartap, Chlorbicyclen, Chlordane, Chlordecone, Chlordimeform, Chlorethoxyfos, Chlorfenapyr, Chlorfenvinphos, Chlorfluazuron, Chlormephos, Chloropicrin, Chlorphoxim, Chlorprazophos, Chlorpyrifos, Chlorpyrifos-methyl, Chlorthiophos, Chromafenozide, Coumaphos, Coumithoate, Crotoxyphos, Crufomate, Cryolite, Cyanofenphos, Cyanophos, Cyanthoate, Cycloprothrin, Cyfluthrin, Cyhalothrin, Cypermethrin, Alpha-cypermethrin, Beta-Cypermethrin, Theta-cypermethrin, Zeta-cypermethrin, Cyphenothrin, Cyromazine, Dazomet, Bromo-DDT, DDT, pp' -DDT, Decarbofuran, Deltamethrin, Demephion, Demephion-O, Demephion-S, Demeton, Demeton-O, Demeton-S, Demeton-methyl, Demeton-O-methyl, Demeton-S-methyl, Demeton-S-methylsulphon, Diafenthiuron, Dialifos, Diazinon, Dicapthon, Dichlofenthion, Dichlorvos, Dicrotophos, Dicyclanil, Dieldrin, Diflubenzuron, Dimefox, Dimethoate, Dimethrin, Dimethylvinphos, Dimetilan, Dinex, Dinotefuran, Diofenolan, Dioxabenzofos, Dioxacarb, Dioxathion, Disulfoton, Dithicrofos, DNOC, Emamectin, EMPC, Empenthrin, Endosulfan, Endothion, EPN, Epofenonane, Esfenvalerate, Ethiofencarb, Ethion, Ethoate-methyl, Ethoprophos, Ethylene dibromide, Ethylene dichloride, Etofenprox, Etrimfos, Famphur, Fenchlorphos, Fenethacarb, Fenfluthrin, Fenitrothion, Fenobucarb, Fenoxycarb, Fenpirithrin, Fenpropathrin, Fensulfothion, Fenthion, Fenvalerate, Fipronil, Flonicamid, Flucofuron, Flucycloxuron, Flucythrinate, Flucythrinate, Flucythrinate, Flufenprox, Flumethrin, Fluvalinate, Fonofos, Formetanate, Formothion, Fosmethilan, Fospirate, Fosthiazate, Fosthietan, Furathiocarb, Furethrin, gamma-HCH, GY-81, Halofenozide, Heptachlor, Heptenophos, Hexaflumuron, Hydramethylnon, Hydrogen cyanide, Hydroprene, Imidacloprid, Imiprothrin, Indoxacarb, IPSP, Isazofos, Isobenzan, Isodrin, Isofenphos, Isoprocarb, Isopropyl O-(methoxyaminothiophosphoryl)salicylat, Isothioate, Isoxathion, Jodfenphos, Kelevan, Kinoprene, Lambda-cyhalothrin, Lirimfos, Lufenuron, Lythidathion, Phosphine, Malathion, Mazidox, Mecarbam, Mecarphon, Menazon, Mephosfolan, Mercurous chloride, Mesulfenfos, Metam, Methacrifos, Methamidophos, Methidathion, Methiocarb, Methocrotophos, Methomyl, Methoprene, Methothrin, Methoxychlor, Methoxyfenozide, Methyl bromide, Methyl isothiocyanate, Metolcarb, Metoxadiazone, Mevinphos, Mexacarbate, Milbemectin, Mipafox, Mirex, Monocrotophos, Morphothion, Naled, Nicotine, Nifluridide, Nitenpyram, Nithiazine, Nitrilacarb, Novaluron, Ölsäure, Omethoate, Oxamyl, Oxydemeton-methyl, Oxydeprofos, Oxydisulfoton, Parathion, Parathion-methyl, Pentachlorophenol, Permethrin, Petroleum Öl, Phenkapton, Phenothrin, Phenthoate, Phorate, Phosalone, Phosfolan, Phosmet, Phosnichlor, Phosphamidon, Phoxim, Phoxim-methyl, Pirimetaphos, Pirimicarb, Pirimiphos-ethyl, Pirimiphos-methyl, Prallethrin, Primidophos, Profenofos, Promacyl, Promecarb, Propaphos, Propetamphos, Propoxur, Prothiofos, Prothoate, Pymetrozine, Pyraclofos, Pyrazophos, Pyresmethrin, Pyrethrins, Pyridaben, Pyridaphenthion, Pyrimidifen, Pyrimitate, Pyriproxyfen, Quinalphos, Quinalphos-methyl, Quinothion, Resmethrin, Rotenone, RU 15525, Sabadilla, Schradan, Silafluofen, Sodium fluoride, Sodium hexafluorosilicate, Pentachlorophenol, Sophamide, Spinosad, Sulcofuron, Sulfluramid, Sulfotep, Sulfuryl fluoride, Sulprofos, Tau-fluvalinate, Tazimcarb, TDE, Tebufenozide, Tebupirimfos, Teflubenzuron, Tefluthrin, Temephos, TEPP, Terallethrin, Terbufos, Tetrachlorvinphos, Tetramethrin, Tetramethrin [(1*R*)- isomers], Thicrofos, Thiocarboxime, Thiocyclam, Thiodicarb, Thiofanox, Thiometon, Thiosultap-sodium, Tolfenpyrad, Tralomethrin, Transfluthrin, Transpermethrin, Triazamate, Triazofos, Trichlorfon, Trichloronat, Tridec-4-enyl acetate, Trifenofos, Triflumuron, Trimethacarb, Triprene, Vamidothion, XMC, Xylylcarb, Spirodiclofen, Acetoprole, Fluacrypyrim, Pyridalyl, Noviflumuron, Flufenerim, Amidoflumet, Acequinocyl, Etoxazole, Bifenazate, Spiromesifen and ZXI 8901.

The following compounds or organisms producing such compounds are described in the Pesticide Manual, 12th ed., British Crop Protection Council, 2000:

| Name | Pesticide Manual 12^{th} ed., Entry No.: (The e-Pesticide Manual 12^{th} ed., Version 2.1 Entry No.:) |
|---|---|
| Abamectin | 1 |
| Acephate | 4 |
| Acetamiprid | 6 |
| Acrinathrin | 11 |
| Acrylonitrile | Superseded record no. 814 |
| Alanycarb | 17 |
| Aldicarb | 18 |
| Aldoxycarb | Superseded record no. 815 |
| Aldrin | Superseded record no. 816 |
| Allethrin(1*R*-isomers), | 19 |
| Allyxycarb | Superseded record no. 818 |
| Alpha-cypermethrin | 197 |
| Phosphine (Aluminium Phosphide) | 616 |
| Amidithion | (822) |
| Aminocarb | Superseded record no. 825 |
| Amiton | Superseded record no. 827 |
| Amitraz | 26 |
| Anabasine | Superseded record no. 829 |
| Athidathion | Superseded record no. 835 |
| Azadirachtin | 42 |
| Azamethiphos | 44 |
| Azinphos-ethyl | 46 |
| Azinphos-methyl | 47 |
| Azothoate | Superseded record no. 840 |
| Bacillus sphaericus | 50 |
| *Bacillus thuringiensis* | 52 |
| *Bacillus thuringiensis* delta endotoxins | 53 |
| Barium polysulfide | Superseded record no. 843 |
| Bendiocarb | 60 |
| Benfuracarb | 62 |
| Bensultap | 68 |
| Beta-cyfluthrin | 190 |
| Beta-cypermethrin | 198 |
| Benzoximate | 72 |
| Bifenthrin | 76 |
| Bioallethrin | 78 |
| Bioallethrin *S*-cyclopentenyl isomer | 79 |
| Biopermethrin | Superseded record no. 859 |
| Bioresmethrin | 80 |
| Borax | 85 |
| Bromfenvinfos | Superseded record no. 865 |
| Bromophos | Superseded record no. 871 |
| Bromophos-ethyl | Superseded record no. 872 |
| Bufencarb | Superseded record no. 875 |
| Buprofezin | 97 |
| Butacarb | Superseded record no. 877 |
| Butathiofos | Superseded record no. 878 |
| Butocarboxim | 101 |
| Butonate | Superseded record no. 883 |
| Butoxycarboxim | 102 |
| Cadusafos | 107 |
| Hydrogen cyanide | 432 |
| Calcium polysulfide | 109 |
| Camphechlor | Superseded record no. 892 |
| Carbanolate | Superseded record no. 894 |
| Carbaryl | 113 |
| Carbofuran | 116 |
| Carbon disulfide | Superseded record no. 896 |
| Carbon tetrachloride | Superseded record no. 897 |
| Carbophenothion | Superseded record no. 898 |
| Carbosulfan | 117 |
| Cartap | 121 |
| Chlorbicyclen | Superseded record no. 910 |
| Chlordane | 128 |
| Chlordecone | Superseded record no. 912 |
| Chlordimeform | Superseded record no. 913 |
| Chlorethoxyfos | 129 |
| Chlorfenapyr | 130 |
| Chlorfenvinphos | 131 |
| Chlorfluazuron | 132 |
| Chlormephos | 136 |
| Chloropicrin | 140 |
| Chlorphoxim | Superseded record no. 939 |
| Chlorprazophos | Superseded record no. 940 |
| Chlorpyrifos | 144 |
| Chlorpyrifos-methyl | 145 |
| Chlorthiophos | Superseded record no. 943 |
| Chromafenozide | 150 |
| Clothianidin | 165 |
| Coumaphos | 173 |
| Coumithoate | Superseded record no. 955 |
| Crotoxyphos | Superseded record no. 959 |
| Crufomate | Superseded record no. 960 |
| Cryolite | 176 |
| Cyanofenphos | Superseded record no. 969 |
| Cyanophos | 182 |
| Cyanthoate | Superseded record no. 970 |
| Cycloprothrin | 185 |
| Cyfluthrin | 189 |
| Cyhalothrin | 192 |
| Cypermethrin | 196 |
| Alpha-cypermethrin | 197 |
| Beta-Cypermethrin | 198 |
| Theta-cypermethrin | 199 |
| Zeta-cypermethrin | 200 |
| Cyphenothrin | 201 |
| Cyromazine | 204 |
| Dazomet | 210 |
| Bromo-DDT | 213 |
| DDT | 213 |
| pp' -DDT | 213 |
| Decarbofuran | Superseded record no. 984 |
| Deltamethrin | 217 |
| Demephion | Superseded record no. 987 |
| Demephion-O | Superseded record no. 987 |
| Demephion-S | Superseded record no. 987 |
| Demeton-S-methyl, Demeton-methyl, | 218 |
| Demeton-O-methyl | |
| Demeton-O, Demeton-S, Demeton | Superseded record no. 988 |
| Demeton-S-methylsulphon | Superseded record no. 989 |
| Diafenthiuron | 220 |
| Dialifos | Superseded record no. 992 |
| Diazinon | 221 |
| Dicapthon | Superseded record no. 1000 |
| Dichlofenthion | Superseded record no. 1001 |
| Dichlorvos | 230 |
| Dicrotophos | 237 |
| Dicyclanil | 238 |
| Dieldrin | Superseded record no. 1020 |
| Diflubenzuron | 244 |
| Dimefox | Superseded record no. 1031 |
| Dimethoate | 257 |
| Dimethrin | Superseded record no. 1032 |
| Dimethylvinphos | 260 |
| Dimetilan | Superseded record no. 1035 |
| Dinex | Superseded record no. 1038 |
| Dinotefuran | 265 |
| Diofenolan | Superseded record no. 1048 |
| Dioxabenzofos | Superseded record no. 1049 |
| Dioxacarb | Superseded record no. 1050 |
| Dioxathion | Superseded record no. 1051 |
| Disulfoton | 273 |
| Dithicrofos | Superseded record no. 1057 |
| DNOC | 277 |
| Emamectin | 284 |
| EMPC | Superseded record no. 1069 |
| Empenthrin | 285 |
| Endosulfan | 287 |
| Endothion | Superseded record no. 1070 |
| EPN | 290 |
| Epofenonane | Superseded record no. 1075 |
| Esfenvalerate | 295 |
| Ethiofencarb | 301 |
| Ethion | 302 |
| Ethoate-methyl | Superseded record no. 1084 |
| Ethoprophos | 305 |
| Ethylene dibromide | 309 |
| Ethylene dichloride | Superseded record no. 1086 |
| Etofenprox | 312 |
| Etrimfos | Superseded record no. 1092 |
| Famphur | 316 |
| Fenchlorphos | Superseded record no. 1098 |
| Fenethacarb | Superseded record no. 1099 |
| Fenfluthrin | Superseded record no. 1100 |
| Fenitrothion | 328 |
| Fenobucarb | 329 |
| Fenoxycarb | 332 |
| Fenpirithrin | Superseded record no. 1105 |
| Fenpropathrin | 334 |
| Fensulfothion | Superseded record no. 1108 |
| Fenthion | 338 |
| Fenvalerate | 342 |
| Fipronil | 347 |
| Flucofuron | Superseded record no. 1115 |
| Flucycloxuron | 359 |
| Flucythrinate | 360 |
| Flucythrinate | 363 |
| Flufenprox | Superseded record no. 1118 |
| Flumethrin | 364 |
| Fluvalinate | Superseded record no. 1130 |
| Fonofos | Superseded record no. 1137 |
| Formetanate | 393 |
| Formothion | Superseded record no. 1139 |
| Fosmethilan | Superseded record no. 1141 |
| Fospirate | Superseded record no. 1142 |
| Fosthiazate | 396 |
| Fosthietan | Superseded record no. 1143 |
| Furathiocarb | 400 |
| Furethrin | Superseded record no. 1147 |
| gamma-HCH | 417 |
| GY-81 | 411 |
| Halofenozide | 413 |
| Heptachlor | 419 |
| Heptenophos | 420 |
| Hexaflumuron | 427 |
| Hydramethylnon | 431 |
| Hydrogen cyanide | 432 |
| Hydroprene | 433 |
| Imidacloprid | 446 |
| Imiprothrin | 448 |
| Indoxacarb | 453 |
| IPSP | Superseded record no. 1175 |
| Isazofos | Superseded record no. 1177 |
| Isobenzan | Superseded record no. 1178 |
| Isodrin | Superseded record no. 1181 |
| Isofenphos | 460 |
| Isoprocarb | 461 |
| Isopropyl | 462 |
| *O*-(methoxyaminothiophosphoryl)salic | |
| ylat | |
| Isothioate | Superseded record no. 1189 |
| Isoxathion | 468 |
| Jodfenphos | Superseded record no. 1193 |
| Kelevan | Superseded record no. 1195 |
| Kinoprene | 471 |
| Lambda-cyhalothrin | 193 |
| Lirimfos | Superseded record no. 1197 |
| Lufenuron | 477 |
| Lythidathion | Superseded record no. 1199 |
| Phosphine | 616 |
| Malathion | 478 |
| Mazidox | Superseded record no. 1201 |
| Mecarbam | 488 |
| Mecarphon | Superseded record no. 1204 |
| Menazon | Superseded record no. 1206 |
| Mephosfolan | Superseded record no. 1207 |
| Mercurous chloride | 499 |
| Mesulfenfos | Superseded record no. 1209 |
| Metam | 504 |
| Methacrifos | Superseded record no. 1212 |
| Methamidophos | 511 |
| Methidathion | 513 |
| Methiocarb | 514 |
| Methocrotophos | Superseded record no. 1219 |
| Methomyl | 515 |
| Methoprene | 516 |
| Methoxychlor | 517 |
| Methoxyfenozide | 518 |
| Methyl bromide | 520 |
| Methyl isothiocyanate | 524 |
| Metolcarb | 531 |
| Metoxadiazone | Superseded record no. 1233 |
| Mevinphos | 537 |
| Mexacarbate | Superseded record no. 1235 |
| Milbemectin | 538 |
| Mipafox | Superseded record no. 1238 |
| Mirex | Superseded record no. 1239 |
| Monocrotophos | 543 |
| Morphothion | Superseded record no. 1245 |
| Naled | 549 |
| Naphthalene | Superseded record no. 1248 |
| Nicotine | 561 |
| Nifluridide | Superseded record no. 1253 |
| Nitenpyram | 562 |
| Nithiazine | Superseded record no. 1255 |
| Nitrilacarb | Superseded record no. 1257 |
| Novaluron | 567 |
| Ölsäure | 572 |
| Omethoate | 573 |
| Oxamyl | 581 |
| Oxydemeton-methyl | 588 |
| Oxydeprofos | Superseded record no. 1268 |
| Oxydisulfoton | Superseded record no. 1269 |
| Parathion | 593 |
| Parathion-methyl | 594 |
| Pentachlorophenol | 600 |
| Permethrin | 603 |
| Petroleum oil | 604 |
| Phenkapton | Superseded record no. 1274 |
| Phenothrin | 606 |
| Phenthoate | 607 |
| Phorate | 612 |
| Phosalone | 613 |
| Phosfolan | Superseded record no. 1282 |
| Phosmet | 614 |
| Phosnichlor | Superseded record no. 1283 |
| Phosphamidon | 615 |
| Phoxim | 617 |
| Phoxim-methyl | Superseded record no. 1284 |
| Pirimetaphos | Superseded record no. 1287 |
| Pirimicarb | 627 |
| Pirimiphos-ethyl | Superseded record no. 1288 |
| Pirimiphos-methyl | 628 |
| Prallethrin | 631 |
| Primidophos | Superseded record no. 1292 |
| Profenofos | 638 |
| Promacyl | Superseded record no. 1297 |
| Promecarb | Superseded record no. 1298 |
| Propaphos | 645 |
| Propetamphos | 649 |
| Propoxur | 654 |
| Prothiofos | 658 |
| Prothoate | Superseded record no. 1304 |
| Pymetrozine | 660 |
| Pyraclofos | 661 |
| Pyrazophos | 664 |
| Pyresmethrin | Superseded record no. 1309 |
| Pyrethrins | 667 |
| Pyridaphenthion | 671 |
| Pyrimidifen | 675 |
| Pyrimitate | Superseded record no. 1312 |
| Pyriproxyfen | 677 |
| Quinalphos | 680 |
| Quinalphos-methyl | Superseded record no. 1318 |
| Quinothion | Superseded record no. 1322 |
| Resmethrin | 688 |
| Rotenone | 690 |
| RU 15525 | 691 |
| Sabadilla | 693 |
| Schradan | Superseded record no. 1331 |
| Silafluofen | 696 |
| Sodium fluoride | Superseded record no. 1341 |
| Sodium hexafluorosilicate | Superseded record no. 1342 |
| Sophamide | Superseded record no. 1344 |
| Spinosad | 702 |
| Sulcofuron | 709 |
| Sulfluramid | 712 |
| Sulfotep | 715 |
| Sulfuryl fluoride | 718 |
| Sulprofos | 719 |
| Tau-fluvalinate | 388 |
| Tazimcarb | Superseded record no. 1354 |
| TDE | Superseded record no. 1356 |
| Tebufenozide | 725 |
| Tebupirimfos | 727 |
| Teflubenzuron | 732 |
| Tefluthrin | 733 |
| Temephos | 734 |
| TEPP | Superseded record no. 1358 |
| Terallethrin | Superseded record no. 1359 |
| Terbufos | 737 |
| Tetrachlorvinphos | 741 |
| Tetramethrin | 747 |
| Tetramethrin[(1*R*)-isomers] | 748 |
| Thiamethoxam | 751 |
| Thicrofos | Superseded record no. 1369 |
| Thiocarboxime | Superseded record no. 1372 |
| Thiodicarb | 757 |
| Thiofanox | 758 |
| Thiometon | 759 |
| Thiosultap-sodium | 271 |
| Tolfenpyrad | 765 |
| Tralomethrin | 768 |
| Transfluthrin | 769 |
| Transpermethrin | Superseded record no. 1382 |
| Triazamate | 774 |
| Triazophos | 776 |
| Trichlorfon | 780 |
| Trichloronat | Superseded record no. 1394 |
| Tridec-4-enyl acetate | 785 |
| Trifenofos | Superseded record no. 1397 |
| Triftumuron | 790 |
| Trimethacarb | 795 |
| Triprene | Superseded record no. 1401 |
| Vamidothion | 801 |
| XMC | 807 |
| Xylylcarb | 808 |
| ZXI 8901 | 812 |

Bistrifluron is described in K. S. Kim *et al.* (*Proc. Br. Crop Prot. Conf. - Pests Dis.,* 2000, **1**, 41. Flonicamid (*N*-(Cyanomethyl)-4-(trifluoromethyl)-3-pyridincarboxamid ) is known from M. Morita *et al.* (*Proc. Br. Crop Prot. Conf.* - *Pests Dis.,* 2000, 1, 59 and from EP-A-0 580 374. Methothrin (4-(Methoxymethyl)benzyl
(1*RS*)-*cis,trans*-2,2-dimethyl-3-(2-methylprop-1-enyl)cyclopropancarboxylat) is registred in the Chemical Abstracts under Nr. CAS RN [34388-29-9]; [11114-02-6]. Thiacloprid ((Z)-3-(6-Chloro-3-pyridylmethyl)-1,3-thiazolidin-2-ylidencyanamid) is known from A. Elbert *et al.*, (*Proc. Br. Crop Prot. Conf.* - *Pests Dis.,* 2000, **1**, 21. Thiocyclam ( *N,N*-dimethyl-1,2,3-trithian-5-ylamin hydrogen oxalat) is described in W. Berg & H. J. Knutti (*Proc. Br. Insectic. Fungic. Conf. 8th,* 1975, **2**, 683.

Such fungicides are descibed for example in Pesticide Manual, 12th ed., British Crop Protection Council, 2000, or in the Internet under "Compendium of Pesticide Common Names", under URL Address *http:llwww.alanwood.netlpesticidesl.*

As plant growth regulators there are Paclobutrazole, Trinexapac-ethyl, Uniconazole-P, Prohexadione-calcium, Trinexapac (744), Chlormequatchlorid (129), Clofencet (148), Cyclanilide (170), Ethephon (281), Flurprimidol (355), Gibberellinsäure (379), Inabenfide (421), Maleinhydrazid (449), Mefluidide (463), Mepiquatchlorid (465), Paclobutrazol (548), Prohexadion-calcium (595), Uniconazol (746) and Thidiazuron (703).

The above-listed compounds are described under the entry numbers added in brackets, in the Pesticide Manual, eleventh ed., British Crop Protection Council, 1997.

Among these pesticidal active ingredients, Acibenzolar-S-Methyl, Ipconazole, Iprodione, Oxolinic acid, Kasugamycin, Capropamide, Captan, Thiabendazole, Thiuram, Thiophanatemethyl, Organocopper, Tricyclazole, Triflumizole, Varidamycin, Azoxystrobin, Pyroquilon, Fludioxonyl, Prochloraz, Probenazol, Benomil, Metasulfocarb, TPN, Oryzastrobin and Metominostrobin as fungicides, Isoprothiolane, Imidachloprid, Ethofenprox, Cartap, Thiamethoxam, Bensultap, Benthiocarb, Monocrotofos, Alprocarb, Clothianidin, Dinotefran, Acetamiprid, Thiacloprid, Fipronil and Ethiprole as insecticides, Bifenox, Oxadiazon, Pentoxazone, Carfentrazone-Ethyl, Oxadiargyl, Pyrachlonil, Butachlor, Pretilachlor, Thenylchlor, Piprerophos, Benslide, Butamifos, Anilofos, Thiobencarb, Molinate, Esprocarb, Dimepiperate, Pyributicarb, Cafenstrole, Indanofan, Mefenacet, Fentrazamide, Etobenzanid, Dithiopyr, Oxaziclomefon, Cinmethylin, Pyriminobac-Methyl, Pyriftalid, Cyhalofop-Butyl, Metamifop, Daimuron, Cumyluron, Bromobutide, Benfuresate. Bensulfuron-Methyl, Azimsulfuron, Pyrazosulfuron-Ethyl, Cinosulfuron, Imazosulfuron, Cyclosulfamuron, Ethoxysulfuron, Halosulfuron-Methyl, Pyrazolate, Pyrazoxyfen, Benzofenap, Benzobicyclon, Naproanilide, Clomeprop, MCP, MCPB, Phenothiol, Bentazon, Simetryn, Prometryn, Dimethametryn and Quinoclamine as herbicides, and Paclobutrazole, Trinexapac-ethyl, Uniconazole-P, Inabenfide and Prohexadione-calcium as plant growth regulators, are preferred.

The above pesticidal active ingredients, including the preferred ones, can be used alone or in combination and, optionally, together with a fertilizer.

A preferred pesticidal composition according to the instant invention comprises at least one insecticidal active ingredient and at least one fungicidal active ingredient.

The pesticidal composition according to the instant invention comprises preferably Thiamethoxam as insecticidal active ingredient, and Pyroquilon and Azoxystrobin as fungicidal active ingredients.

The pesticidal composition according to the instant invention comprises most preferably Thiamethoxam as insecticidal active ingredient and Pyroquilon as fungicidal active ingredient.

Preferred pesticidal composition according to the instant invention are characterized in that if
a) the first pesticide is completely released after application of the composition, the release rate of a second pesticide is below 50%,
b) the first pesticide is completely released after application of the composition, the release rate of a second pesticide is below 10%.
c) the first pesticide is completely released after application of the composition, the release rate of a second pesticide is below 2%.

A further object of the present invention is the use of a composition in protecting plants against infestation by phytopathogenic microorganisms and for controlling insects or representatives of the order Acarina.

The instant invention is useful as a method of controlling and preventing an infestation of crop plants by phytopathogenic microorganisms, in particular fungal organisms and for controlling insects or representatives of the order Acarina, which comprises the application to the plant, to parts of plants or to the locus thereof of a composition comprising at least two solid particle formulations, said formulations each comprising at least one pesticide at least one inert carrier and at least one surfactant, characterized in that at least one of said solid particle formulation is coated with a thermoplastic polymer and the pesticide release rates of at least two said solid particle formulations are different from each other.

Further objects of the present invention are:
a) a method for controlling undesirable plant growth and for controlling and preventing an infestation of crop plants by phytopathogenic microorganisms, which comprises the application to the plants or to the locus thereof of a composition comprising at least two solid particle formulations, said formulations each comprising at least one pesticide at least one inert carrier and at least one surfactant, characterized in that at least one of said solid particle formulation is coated with a thermoplastic polymer and the pesticide release rates of at least two said solid particle formulations are different from each other.
b) a method for controlling undesirable plant growth, for controlling insects or representatives of the order Acarina and for controlling and preventing an infestation of crop plants by phytopathogenic microorganisms, which comprises the application to the plants or to the locus thereof of a composition comprising at least two solid particle formulations, said formulations each comprising at least one pesticide at least one inert carrier and at least one surfactant, characterized in that at least one of said solid particle formulation is coated with a thermoplastic polymer and the pesticide release rates of at least two said solid particle formulations are different from each other.
c) a method for controlling undesirable plant growth and for controlling insects or representatives of the order Acarina, which comprises the application to the plants or to the locus thereof of a composition comprising at least two solid particle formulations, said formulations each comprising at least one pesticide at least one inert carrier and at least one surfactant, characterized in that at least one of said solid particle formulation is coated with a thermoplastic polymer and the pesticide release rates of at least two said solid particle formulations are different from each other.

The solid carriers suitably used in the solid pesticide particles of the instant invention are normally natural mineral fillers, such as zeolite, calcite, talc, kaolin, montmorillonite, attapulgite or other mineral carriers. In order to improve the physical properties it is also possible to add highly dispersed silisic acid or highly dispersed absorbent polymers. Suitable granulated adsorptive carriers are porous types, for example pumice, broken brick, sepiolite or bentonite, and suitable nonsorbent carriers are, for example, calcite or sand. In addition, a great number of pregranulated materials of inorganic or organic nature can be used, e.g. especially dolomite or pulverised plant residues.

These carriers can be used alone or in combination.

Suitable surfactants and dispersants used in the solid pesticide particles of the instant invention are non-ionic, cationic and/or anionic having good emulsifying, dispersing and wetting properties.

Suitable anionic dispersants/surfactants are for example:
Salts of polystyrenesulfonic acid, in particular the alkali metal, alkaline earth metal and ammonium salts;
Salts of polyvinylsulfonic acid, in particular the alkali metal, alkaline earth metal and ammonium salts;
Salts of condensates of naphthalenesulfonic acids, preferably naphthalene-2-sulfonic acid, with formaldehyde, in particular the alkali metal, alkaline earth metal and ammonium salts;
Salts of condensates of naphthalenesulfonic acid with phenolsulfonic acid and formaldehyde, in particular the alkali metal, alkaline earth metal and ammonium salts;
Salts of ligninsulfonic acid, in particular the sodium, potassium, magnesium, calcium or ammonium salts;
Salts of naphthalenesulfonic acids, in particular the alkali metal, alkaline earth metal and ammonium salts.
Suitable nonionic dispersants/surfactants are for example polyvinyl alcohol, polyvinyl methyl ether, polyvinylpyrrolidone, alkylated polyvinylpyrrolidone, hydroxyethyl cellulose, hydroxypropyl cellulose, methyl cellulose (degree of substitution: 1.5 to 2), hydroxyethylmethyl cellulose, hydroxypropylmethyl cellulose, poly(2-hydroxyethyl)methacrylate, poly[2-(2-hydroxyethoxy)ethyl]methacrylate, polyethylene oxide (polyoxyethylene) and polyallyl alcohol (polyglycidol).

Products which can be obtained by reaction of ethylene oxide, or by the combined reaction of ethylene oxide and propylene oxide, with fatty alcohols, alkyl phenols, styrenephenols, fatty acids, fatty acid esters of polyhydroxy compounds, castor oil, fatty acid amides and fatty amines, where the number of ethylene oxide and propylene oxide units may vary within wide limits. In general, the number of ethylene oxide units or ethylene oxide and propylene oxide units is from 1 to 200, preferably from 5 to 100 and, most preferably, from 8 to 40.

Suitable cationic dispersants/surfactants are for example quaternary ammonium salts which contain, as N-substituent, at least one C₈-C₂₂ alkyl radical and, as further substituents, unsaturated or halogenated lower alkyl, benzyl or hydroxy-lower alkyl radicals.

These surfactants, including the preferred ones, can be used alone or in combination.

The solid pesticide particles can be formulated by any known method, such as mixing at least one active ingredient with at least one carrier material, at least one dispersant /surfactant and at least one adjuvant, subsequently granulation by means of extrusion, campaction, agglomeration by fluidized bed granulator or agitation granulator; milling by means of mechanical milling, e.g. hammer mill, or by means of wet milling, e.g. beads mill; tabletting by means of roller compactor. The content of active ingredient can vary within a wide range, for example from 0.1-100wt%, preferably 0.1-70wt%, based on the total weight of the granules or powder.

The thus formulated solid pesticide particles are charged in the drum of a pan coater used in the process according to the instant invention. The amount of solid pesticide particles to be charged in said drum varies depending upon various factors e.g. the volume of the drum, desired amount of coated solid pesticide particles and the like. If the pan coater is of a 100 kg-type, the amount of solid pesticide particles is usually 30-99.9kg, preferably 40-99kg, more preferably 50-99kg, most preferred 55-99kg. Of course, these values can be varied depending on the amount of solid pesticide particles to be coated.

The spraying nozzle, through which a mixture comprising water and at least one thermoplastic polymer emulsified therein is sprayed, is a conventional one, as well; any commercially available spraying nozzle can be used for the process according to the instant invention. Examples of such spraying nozzles include T-AGHV (diameter of the nozzle outlet:1.6mm) manufactured by DeVILBISS Co., Ltd. The spraying nozzle is attached to the pan coater for example by means of a fitting provided to the pan coater.

The "thermoplastic polymer" used in the process according to the instant invention means any polymer which is water-emulsifiable, thermoplastic and film forming. They are well known in the art. Examples of such polymers include polyethylene, polypropylene and copolymers of ethylene and/or propylene with unsubstituted or substituted olefins as comonomers; polyvinyl alcohol and copolymers of vinyl alcohol with unsubstituted or substituted olefins as comonomers; polymethacrylates, polyacrylates and copolymers of methacrylates and/or acrylates with unsubstituted or substituted olefins as comonomers; polymethacrylic acid, polyacrylic acid and polymaleic acid and copolymers of methacrylic acid, acrylic acid and/or maleic acid with unsubstituted or substituted olefins as comonomers; polymaleic acid esters and copolymers of maleic acid esters with unsubstituted or substituted olefins as comonomers; polyvinyl acetate and copolymers of vinyl acetate with unsubstituted or substituted olefins as comonomers; polyacrylonitrile and copolymers of acrylonitrile with unsubstituted or substituted olefins as comonomers; polyacrylamide and polymethacrylamide and copolymers of acrylamide, methacrylamide or both with unsubstituted or substituted olefins as comonomers; polyhydroxyalkyl- or polyaminoalkyl vinylalcohol and copolymers of hydroxyalkylvinylether, aminoalkylvinylether or both with unsubstituted or substituted olefins as comonomers; polybutadiene, polyisoprene, polychloroprene and copolymers of butadiene, isoprene, chloroprene or two or three of these with unsubstituted or substituted olefins as comonomers; hydroxylated polybutadienes from butadiene, isoprene or chloroprene and copolymers of butadiene, isoprene, chloroprene or two or three of these monomers with unsubstituted or substituted olefins as comonomers; polystyrene and copolymers of styrene with unsubstituted or substituted olefins; hydroxy- or aminopolystyrene, chloromethylpolystyrene, and polystyrenesulfonic acid and copolymers of hydroxystyrene, aminostyrene, chloromethylstyrene, polystyrenesulfonic acid, or two or more of these monomers with unsubstituted or substituted olefins as comonomers; polyurethanes and dextrin.

Preferred polymers are for example polyethylene, polypropylene and copolymers of ethylene and/or propylene with unsubstituted or substituted olefins as comonomers; polymethacrylates, polyacrylates and copolymers of methacrylates and/or acrylates with unsubstituted or substituted olefins as comonomers; polyvinylacetate and copolymers of vinylacetate with unsubstituted or substituted olefins as comonomers; polyacrylonitrile and copolymers of acrylonitrile with unsubstituted or substituted olefins as comonomers; copolymers of acrylamide or methacrylamide with unsubstituted or substituted olefins as comonomers; polybutadiene, polyisoprene, polychloroprene and copolymers of butadiene, isoprene, chloroprene or two or three of these with unsubstituted or substituted olefins as comonomers; polystyrene and copolymers of styrene with unsubstituted or substituted olefins; copolymers of hydroxystyrene, aminostyrene, chloromethylstyrene or polystyrenesulfonic acid with unsubstituted or substituted olefins as comonomers; polyurethanes and dextrin.

Especially preferred polymers are for example polyacrylates, such as polymethylacrylate and polyethylacrylate; polymethacrylates, polymethylmethacrylate and polyethylmethacrylate; polyvinylacetate; polystyrene; styrene/acrylate copolymers, such as styrene/methylacrylate and styrene/ethylacrylate; styrene/methacrylate copolymers, such as styrene/methylmethacrylate and styrene/ethyl methacrylate; vinylacetate/acrylate copolymers, such as vinylacetate/methylacrylate and vinylacetate/ethylacrylate; vinylacetate/methacrylate copolymers, such as vinylacetate/methylmethacrylate and vinylacetate/ethylmethacrylate; ethylene/vinylacetate copolymer; ethylene/vinylacetate/acrylate terpolymers, such as ethylene/vinylacetate/methylacrylate; ethylene/vinylacetate/methacrylate terpolymers, such as ethylene/vinylacetate/methylmethacrylate; polybutadiene; polyisoprene; dextrin.

Particularly preferred polymers are polyacrylates, polyvinylacetate, dextrin and polyurethanes.

The most preferred polymers are polyvinylacetate and polyacrylates.

The above polymers, including the preferred ones, can be used alone or as a combination of at least two of them.

The thermoplastic polymer is admixed with the solvent, e.g. water, and optionally with an organic solvent such as an alcohol, a ketone, an amine or an organic acid, a surfactant such as those as mentioned above and/or other additives customarily used for the preparation of polymer emulsions to obtain a mixture, in which the thermoplastic polymer is emulsified, to be sprayed over the solid pesticide particles. The concentarion of such a thermoplastic polymer is usually 1-85w/w%, preferably 5-80w/w%, more preferably 10-70w/w%, most preferred 40-60w/w%, based on the total weight of the mixture. If a combination of thermoplastic polymers is to be used, then the above concentration should be understood as the total concentration of the polymers used in the mixture. Although the preferred concentration of the thermoplastic polymers is as described above, the mixture can sometimes be too viscous depending on the polymer such as polyacrylates. In such a case, the concentration should be made lower than those above. If the polymer is an acrylate, the concentration can be as low as 1-10%, preferably 2-10%.

The thus prepared mixture is kept at a temperature 0-80°C, preferably 10-50°C, more preferably 10-40°C, most preferred 10-30 °C and charged in a container, and pumped by a pump through a pipe up to the nozzle attached to the pan coater.

The gas inlet, through which gas is blown against the solid pesticide particles can be a tube with a hole or a tube with a plurality of holes is in general located at the bottom of the drum of said pan coater, or preferably the gas inlet can be realised by a perforated drum through which, gas is continuously blown. The pan coater is equipped with a gas outlet, which allows continuous gas flow from inlet to outlet. The position of the gas outlet is not critical. The gas outlet is located preferably at the top of the pan coater.

In the process according to the instant invention, the mixture comprising at least one solvent and at least one thermoplastic polymer emulsidfied therein is sprayed over, and air is blown against, the solid pesticide particles while the pan coater is operated. Usually, spraying of the above mixture and blowing of air start simultaneously with the start of operation of the pan coater and termiante simultaneously with the termination of operation of the pan coater. However, it is preferred to start the spraying of the above mixture and blowing of air after the start of operation of the pan coater and to terminate them before the termination of operation of the pan coater. Blowing of air can start prior to the start of operation of the pan coater and/or spraying of the above mixture and can terminate after the termination of the operation of the pan coater and/or spraying of the mixture.
The operational conditions will be described in the following:

The pan coater is operated at a rotation speed, which could be determined by a person skilled in the art. If the pan coater is of a 100kg-type, it is operated at a rotation speed of 3-18rpm, preferably 5-15rpm, more preferably from 8-15rpm, most preferred 10-15rpm.

The time during which the pan coater is operated strongly depends on various factors, e.g. the amount of solid pesticide particles, particle size of solid pesticide particles, amount of the mixture comprising water and at least one thermoplastic polymer emulsified therein to be sprayed over the solid pesticide particles, concentration of the thermoplastic polymer in said mixture, rotating speed of the pan coater and the like, and hence, could be determined by a person skilled in the art.

The amount of the mixture comprising at least one solvent and at least one thermoplastic polymer emulsified therein to be sprayed over the solid pesticide particles depends on various factors e.g. the kind of the pesticidal active ingredient, desired thickness of the layer formed on the surface of each solid pesticide particle, the amount of solid pesticide particles, the particle size of solid pesticide particles, the concentration of the thermoplastic polymer and the like, and could be determined by a person skilled in the art. However, the amount of the mixture is selected such that the content of the thermoplastic polymer in the coated solid pesticide is 0.1-70w/w%, preferably 0.5-60w/w%, more preferably 1-50 w/w%, most preferred 2-45w/w%, based on the total weight of the coated solid pesticide. The rate at which such a mixture is sprayed over the solid pesticide particles should also be determined empirically. However, if the pan coater is of a 100kg-type, the rate is usually 100-1200ml/min, preferably 100-800ml/min, more preferably 100-600ml/min, and most preferred 200-600ml/min.

The blow rate of air strongly depends on various factors e.g. the amount of solid pesticide particles, the average particle size of solid pesticide particles, the amount of the mixture to be sprayed over the solid pesticide particles, kind and concentration of the thermoplastic polymer(s) contained in said mixture and the like and, hence, could be determined by a person skilled in the art. If the pan coater is of a 100 kg-type, the blow rate is usually 5-35m³/min, preferably 10-35m³/min , more preferably 15-35m³/min , most preferred from 20-35m³/min. Suitable temperature of the air blown is strongly dependent on the thermoplastic polymer contained in the mixture sprayed over the solid pesticide particles. If the thermoplastic polymer is a vinyl polymer e.g. polyvinyl acetate or a polyacrylate, the temperature of air blown is usually 25-95°C, preferably 25-75°C , more preferably 25-70°C, most preferred 30-60°C.

Prior to spraying the above mixture comprising at least one solvent and at least one thermoplastic polymer emulsified therein over solid pesticide particles, it is economically advantageous to coat the solid pesticide particles with a hydrophobic liquid, such as olive oil, palm oil, soybean oil, liquid paraffin or the like, in order to fill the pores of the solid pesticide particles with said hydrophobic liquid, and then to form a coating layer only on the surface of said pesticide particles. Furthermore, said coating with a hydrophobic liquid allows to reduce the amount of thermoplastic polymer used for the coating of the solid pesticide particles. Spraying a hydrophobic liquid prior to spraying the the above - mentioned mixture comprising at least one solvent and at least one thermoplastic polymer emulsified therein over solid pesticide particles is particularly advantageous for porous solid pesticides particles. Most preferred is liquid paraffin. The coating of solid pesticide particles with such a hydrophobic liquid is carried out in the same manner and under the same conditions as those for spraying the mixture comprising at least one solvent and at least one thermoplastic polymer emulsified therein. The hydrophobic liquid is applied in an amount of usually 0.01-10wt%, preferably 0.01-5wt%, more prefebaly 0.1-5wt%, most preferred 1-5wt%, based on the total weight of the coated solid pesticide.

It can be advantageous to additionally coat the coated pesticide particles prepared in the above process, with a second thermoplastic polymer layer by spraying a second mixture comprising at least one solvent and at least one thermoplastic polymer over said coated solid pesticide particles. For example, if the mixture comprising at least one solvent and at least one thermoplastic polymer emulsified therein contains only polyvinyl acetate, it is advantageous to additionally coat the coated pesticide particles, prepared in the above process, with a second thermoplastic polymer such as a polyacrylate by spraying said mixture comprising at least one solvent and the polyacrylate over said coated solid pesticide particles. The operational conditions under which the coating with the polyacrylate are identical to those as described above. The weight ratio between polyvinyl acetate and polyacrylate in the coated solid pesticide is usually 100:0.1 to 100: 50, preferably 100:0.5 to 100: 50, more preferably 100:1 to 100:30, most pereferred 100:1 to 100:20. Such an over-coating process for the coated pesticide particles can be conducted by the procedure identical to that described above, if necessary.

After completion of the spraying of the mixture comprising at least one solvent and at least one thermoplastic polymer emulsified therein in the process according to the invention, it is advantageous to add at least one powdered solid such as talc, cray, calcium carbonate, kieselguhr, zeolite, bentonite, acid cray, activated cray, white carbon, titanium dioxide, cellulose, starch, hydrophilic silica, hydrophobic silica and so on, to the coated solid pesticide particles with the pan coater being operated. The addition of said powdered solid can be performed with a conventional mixer such as a concrete mixer after transfer of said coated solid pesticide particles from the pan coater to said mixer. The addition of such a powdered solid allows to improve the storability and the handability of said coated solid pesticide particles by reduction of the agglomeration of said particles.

Preferred powdered solids are talc, cray, calcium carbonate, kieselgur, zeolite, bentonite, acid cray, activated cray, white carbon, titanium dioxide, cellulose, starch, hydrophilic silica and hydrophobic silica. Particularly preferred powdered solids are talc, white carbon, starch and hydrophilic silica. The most preferred powdered solids are talc and hydrophilic silica. The powdered solid is added in an amount of usually 0.01-5wt%, preferably 0.05-5wt%, more preferably 0.1-5wt%, most preferred 0.1-2wt%, based on the total weight of the coated solid pesticide. The powdered solid can be charged directly in the pan coater after completion of the spraying of the mixture comprising at least one solvent and at least one thermoplastic polymer emulsified therein. On the other hand, said powdered solid can be charged in a conventional mixer or concrete mixer after transfer of the coated solid pesticide particles from the pan coater to said mixer.

It can be economically and technically advantageous after completion of the spraying of the mixture comprising at least one solvent and at least one thermoplastic polymer emulsified therein, to transfer the coated solid pesticide particles in a concrete mixer in order to add the powdered solid.

Instead of the spraying of the mixture comprising at least one solvent and at least one thermoplastic polymer emulsified therein and the subsequent addition of the powdered solid to cover the coated pesticide formulation with said powdered solid, spraying of a mixture comprising at least one solvent, at least one thermoplastic polymer emulsified therein and at least one powdered solid can also be used for preparation of the coated solid pesticide. The addition of such a powdered solid to a mixture comprising at least one solvent and at least one thermoplastic polymer emulsified therein allows to increase the glass transition temperature of the coated solid pesticide particles, and then to improve the storability and handability of said particles.

Preferred powdered solids are talc, cray, calcium carbonate, kieselguhr, zeolite, bentonite, acid cray, activated cray, white carbon, titanium dioxide, cellulose, starch, hydrophilic silica and hydrophobic silica. Particularly preferred powdered solids are talc, white carbon, starch and hydrophilic silica. The most preferred powdered solids are talc and hydrophilic silica.

Amount of the powdered solid to be suspended in the mixture comprising at least one solvent and at least one thermoplastic polymer as mentioned above is usually 0.01-10wt%, preferably 0.05-1 0wt%, more preferably 0.1-10wt%. most preferred 0.1-8wt%, based on the total weight of the coated solid pesticide. The mixture comprising at least one solvent, at least one thermoplastic polymer and said powdered solid can be sprayed through the spraying nozzle connected to the pan coater. If necessary, the mixture is previously stirred by means of a mixer or the like to avoid precipitation of the said powdered solid during the spraying.

Since the pan coater to be used in the instant invention easily allows change of the spraying mixture to another mixture during the operation, the over-coating process mentioned above can be continuousely conducted without time-consuming works. For example, if a coated solid pesticide comprising a core granule, a polyvinylacetate layer and a polyacrylrate layer is desired, the coated pesticide can be easily obtained through spraying of a mixture comprising at least one solvent and polyvinylacetate emulsified, and subsequently spraying of a mixture comprising at least one solvent and polyacrylate emulsified.

Throughout the above operation, the temperature of the drum where solid pesticide particles are retained is kept at a temperature of usually 5-80°C, preferably 10-70 °C, more preferably 15-60°C, most preferred 20-50 °C.

After the termination of operation of the pan coater, the thus coated solid pesticide particles are taken out of the drum of the pan coater, thereby obtaining the targeted coated solid pesticide.

The process according to the instant invention enables the production of coated solid pesticides in a very simple process, without requiring any manual intervention during the operation, and yields coated solid pesticides with excellently uniform coating layers and having extraordinarily well controlled release property of active ingredients.

The process according to the instant invention can suitably be applied for the production of compositions comprising two or more kinds of coated solid pesticides. The process is very simple. Each of the coated solid pesticide, of which the composition is comprised, is produced by the process according to the instant invention, which then will be admixed with each other in a desired weight ratio. For example, if the targeted composition comprises two different coated solid pesticides (A) and (B), the coated solid pesticides (A) and (B) are separately produced by the process according to the instant invention and then admixed with each other in a desired weight ratio to obtain the targeted composition comprising coated solid pesticides (A) and (B) (hereinafter, referred to as "Process (1)"). Another process for the production of such compositions comprising two or more kinds of coated solid pesticides is to use a mixture of solid pesticide particles of the corresponding coated solid pesticides as the solid pesticide particles of the instant invention. For example, if the targeted composition comprises two coated solid pesticides (A) and (B), the solid pesticide particles, from which the coated solid pesticides (A) and (B) will be produced, are placed as the solid pesticide particles in the drum of a pan coater and then subject to coating according to the process of the instant invention, thereby obtaining the targeted composition comprising the coated solid pesticides (A) and (B) (hereinafter, referred to as "Process (2)").

These processes, Process (1) in particluar, are suited for the producion of compositions comprising a slow-releasing coated pesticide and a fast-releasing coated pesticide as disclosed in WO 02/05641.

If the conditions in Process (1) are selected such that only the contents of the thermoplastic polymer are different between the coated solid pesticides (A) and (B), a composition comprising a slow-releasing coated pesticide (i.e. that bearing thicker coating layer) and a fast-releasing coated pesticide (i.e. that bearing thinner coating layer) is obtained, the composition corresponding to a one where the thickness of coating layers are different but the active ingredient content is the same between the slow- and fast-releasing coated pesticides. The amount of the mixture comprising at least one solvent and at least one thermoplastic polymer emulsified therein to be sprayed over the solid pesticide particles should be determined such that the content of the thermoplastic polymer in the coated solid pesticide is 0.1-70w/w%, preferably 1-60w/w%, more preferably 5-50 w/w%, most preferred 10-45w/w%, based on the total weight of the coated solid pesticide, in the slow-releasing coated pesticide and 0.1-50w/w%, preferably 0.5-40w/w%, more preferably 1-20w/w%, most preferred 2-15 w/w%, based on the total weight of the coated solid pesticide, in the fast-releasing coated pesticide. Of course, these amounts strongly depend on the kind of the pesticidal active ingredient and, hence, could be determined by a person skilled in the art.

In this process, the active ingredient content does not necessarily need to be the same between the slow- and fast-releasing coated pesticides. If such slow- and fast- releasing coated pesticides , in which the active ingredient contents are different, are desired, solid pesticide particles with the corresponding active ingredient contents are used as the respective solid pesticide particles.

If the conditions in Process (2) are selected such that only the pesticidal active ingredient contents are different between the coated solid pesticides (A) and (B), a composition comprising a low-concentration coated pesticide (i.e. that with lower active ingredient content) and a high-concentration coated pesticide (i.e. that with higher active ingredient content) is obtained. In said composition, the pesticidal active ingredient contents are different but the thickness of formed coating layers films is identical between the low- and high-concentration coated pesticides. The pesticidal active ingredient content in the coated solid pesticide is from 0.01- 90 w/w%, preferably from 0.1-75w/w%, more preferably from 0.5-50w/w%, most preferred from 1-40w/w% in the low-concentration coated pesticide and from 0.01-90w/w%, preferably from 0.1-75w/w%, more preferably from 0.5-50w/w%, most preferred from 1-10w/w% in the high-concentration coated pesticide. In this process, the release rate can further be controlled by using different carriers between the low- and high-concentration coated pesticides.

The instant invention will be further explained with reference to the following examples, which by no means are limitative.

### Examples

### 1. Preparation of solid pesticide particles

### (1) Solid pesticide particles 1

57.4 parts by weight of Pyroquilon active ingredient (a fungicide, a product of Syngenta Japan K.K.), 10.0 parts by weight of Amycol H (a pregelatinized starch from potato, a product of NIPPON STARCH CHEMICAL Co. Ltd.) and 32.55 parts by weight of calcium carbonate were mixed, to which 0.05 parts by weight (in 15.5 parts by weight of water) of Sorpol 5115 (an alkenyl sulfonate, a product of Toho Chemical Industries Co., Ltd.) were added. The thus prepared mixture was well mixed and kneaded, which subsequently was subject to granulation using a granulator equipped with a 1.0mm screen. The granules thus obtained were mixed in a fluidized bed dryer under air spray the temperature of which is 70°C at the air inlet and 50°C at the outlet. After drying, the granules were sieved so as to remove those granules with diameters larger than 1700µm or smaller than 850µm. The solid pesticide particles prepared above is hereinafter called the "solid pesticide particles 1".

### (2) Solid pesticide particles 2

4.56 parts by weight of Thiamethoxam active ingredient (an insecticide, a product of Syngenta Japan K.K.), 2.0 parts by weight of Amycol H (a pregelatinized starch from potato, a product of NIPPON STARCH CHEMICAL Co. Ltd.), 4.0 parts by weight of Amycol K (a pregelatinized starch from tapioka, a product of NIPPON STARCH CHEMICAL Co. Ltd.), 15.0 parts by weight of Zeeklite SGW (Zeolite clay, a product of ZEEKLITE Co.Ltd.) and 74.05 parts by weight of Neoraito clay (Pyrophylite clay, a product of NEORAITO KOSAN Co. Ltd.) were mixed, to which 0.3 parts by weight (in 24 parts by weight of water) of Sorpol 5115 (an alkenyl sulfonate, a product of Toho Chemical Industries Co., Ltd.) were added. The thus prepared mixture was well mixed and kneaded, which subsequently was subject to granulation using a granulator equipped with a 1.0mm acreen. The granules thus obtained were mixed in a fluidized bed dryer under air spray the temperature of which is 70°C at the air inlet and 50° C at the outlet. After drying, the granules were sieved so as to remove those granules with diameters larger than 1700µm or smaller than 850µm. The solid pesticide particles prepared above is hereinafter called the "solid pesticide particles 2".

### (3) Solid pesticide particles 3

3.43 parts by weight of Pyroquilon active ingredient (a fungicide, a product of Syngenta japan K.K.), 3.43 parts by weight of Thiamethoxam (an insecticide, a product of Syngenta Japan K.K), 2Kg of Amycol H (a pregelatinized starch from potato, a product of NIPPON STARCH CHEMICAL Co. Ltd.), 4.0 parts by weight of Amycol K (a pregelatinized starch from tapioka, a product of NIPPON STARCH CHEMICAL Co. Ltd.), 15.0 parts by weight of Zeeklite SGW (Zeolite clay, a product of ZEEKLITE Co.Ltd.) and 72.09 parts by weight of Neoraito clay (Pyrophylite clay, a product of NEORAITO KOSAN Co. Ltd.) were mixed, to which 0.05 parts by weight (in 24 parts by weight of water) of Sorpol 5115 (an alkenyl sulfonate, a product of Toho Chemical Industries Co., Ltd.) were added. The thus prepared mixture was well mixed and kneaded, which subsequently was subject to granulation using a granulator equipped with a 1.0mm acreen. The granules thus obtained were mixed in a fluidized bed dryer under air spray the temperature of which is 70°C at the air inlet and 50°C at the outlet. After drying, the granules were sieved so as to remove those granules with diameters larger than 1700µm or smaller than 850µm. The solid pesticide particles prepared above is hereinafter called the "solid pesticide particles 3".

### (4) Solid pesticide particles 4

36.08 parts by weight of Pyroquilon active ingredient (a fungicide, a product of Syngenta Japan K.K.), 5.00 parts by weight of Amycol H (a pregelatinized starch from potato, a product of NIPPON STARCH CHEMICAL Co. Ltd.) and 53.62 parts by weight of calcium carbonate were mixed, to which 0.30 parts by weight (in 15.5 parts by weight of water) of Sorpol 5115 (an alkenyl sulfonate, a product of Toho Chemical Industries Co., Ltd.) were added. The thus prepared mixture was well mixed and kneaded, which subsequently was subject to granulation using a granulator equipped with a 1.0mm screen. The granules thus obtained were mixed in a fluidized bed dryer under air spray the temperature of which is 70°C at the air inlet and 50°C at the outlet. After drying, the granules were sieved so as to remove those granules with diameters larger than 1700µm or smaller than 850µm. The solid pesticide particles prepared above is hereinafter called the "solid pesticide particles 4".

### (5) Solid pesticide particles 5

7.54 parts by weight of Thiamethoxam active ingredient (an insecticide, a product of Syngenta Japan K.K.), 2.0 parts by weight of Amycol H (a pregelatinized starch from potato, a product of NIPPON STARCH CHEMICAL Co. Ltd.), 4.0 parts by weight of Amycol K (a pregelatinized starch from tapioka, a product of NIPPON STARCH CHEMICAL Co. Ltd.), 15.0 parts by weight of Zeeklite SGW (Zeolite clay, a product of ZEEKLITE Co.Ltd.) and 71.414.05 parts by weight of Neoraito clay (Pyrophylite clay, a product of NEORAITO KOSAN Co. Ltd.) were mixed, to which 0.053 parts by weight (in 24 parts by weight of water) of Sorpol 5115 (an alkenyl sulfonate, a product of Toho Chemical Industries Co., Ltd.) were added. The thus prepared mixture was well mixed and kneaded, which subsequently was subject to granulation using a granulator equipped with a 1.0mm acreen. The granules thus obtained were mixed in a fluidized bed dryer under air spray the temperature of which is 70°C at the air inlet and 50°C at the outlet. After drying, the granules were sieved so as to remove those granules with diameters larger than 1700µm or smaller than 850µm. The solid pesticide particles prepared above is hereinafter called the "solid pesticide particles 5".

### 2. Coating of solid pesticide particles

### Example 1: Coating of solid pesticide particles 1

64.3Kg of the solid pesticide particles 1 prepared in 1(1) above were charged in the drum of Dria Coater DRC-1200DS (a pan coater manufactured by Powrex Corporation) equipped with a spraying nozzle and an air inlet and an air outlet, then, operational conditions were selected as follows:
- drum rotation speed: 12rpm
- spray rate: 250ml/min
- air blow rate: 30m³/min
- inlet temperature of air blown: 40°C

After the operational conditions were adjusted as stated above, 2.6Kg of Moresco White P-70 (liquid paraffin, a product of Matsumura Oil Co.Ltd.) were homogeneously sprayed over the solid pesticide particles to thereby coat the solid pesticide particles with liquid paraffin. Then, 89. 53Kg of SH-520 (a 50wt% aqueous polyvinyl acetate emulsion, a product of Showa Kohbunshi Co.Ltd) were sprayed over the solid pesticide particles to thereby coat the solid pesticide particles with polyvinyl acetate, during which the temperature on the surface of the solid pesticide particles was kept at about 25°C. Subsequently, 0.57Kg of talc were added to the solid pesticide particles, and the coated solid pesticide particles were taken out of the drum, thereby obtaining a coated solid pesticide (the "coated solid pesticide 1"). The coated solid pesticide 1 is characterized as follows:
- thickness of the layer formed on the surface of solid pesticide particles: 120 µm
- content of solid pesticide particles 1: 57.5w/wt%
- liquid paraffin content: 2w/w%
- polyvinyl acetate content: 40w/wt%
- talc content: 0.5w/wt%

### Example 2: Coating of solid pesticide particles 2

69.25Kg of the solid pesticide particles 2 prepared in 1(2) above were charged in the drum of Dria Coater DRC-1200DS (a pan coater manufactured by Powrex Corporation) equipped with a spraying nozzle, an air inlet and an air outlet, then, operational conditions were selected as follows:
- drum rotation speed: 12rpm
- spray rate: 250ml/min
- air blow rate: 30m³/min
- inlet temperature of air blown: 40°C

After the operational conditions were adjusted as stated above, 2.17Kg of Moresco White P-70 (liquid paraffin, a product of Matsumura Oil Co.Ltd.) were homogeneously sprayed over the solid pesticide particles to thereby coat the solid pesticide particles with liquid paraffin. Then, 70.88Kg of SH-520 (a 50wt% aqueous polyvinyl acetate emulsion, a product of Showa Kobunshi Co.Ltd.) were sprayed over the solid pesticide particles to thereby coat the solid pesticide particles with polyvinyl acetate, during which the temperature on the surface of the solid pesticide particles was kept at about 25°C. Subsequently, 0.54Kg of talc were added to the solid pesticide particles, and the coated solid pesticide particles were taken out of the drum, thereby obtaining a coated solid pesticide (the "coated solid pesticide 2"). The coated solid pesticide 2 is characterized as follows:
- thickness of the layer formed on the surface of solid pesticide particles: 90 µm
- content of solid pesticide particles 2: 64.5w/wt%
- liquid paraffin content: 2w/w%
- polyvinyl acetate content: 33w/wt%
- talc content: 0.5w/wt%

### Example 3: Coating of solid pesticide particles 3

99.0Kg of the solid pesticide particles 3 prepared in 1 (3) above were charged in the drum of Dria Coater DRC-1200DS (a pan coater manufactured by Powrex Corporation) equipped with a spraying nozzle, an air inlet and an air outlet, then, operational conditions were selected as follows:
- drum rotation speed: 12rpm
- spray rate: 250ml/min
- air blow rate: 30m³/min
- inlet temperature of air blown: 40°C

After the operational conditions were adjusted as stated above, 2.29Kg of Moresco White P-70 (liquid paraffin, a product of Matsumura Oil Co.Ltd.) were homogeneously sprayed over the solid pesticide particles to thereby coat the solid pesticide particles with liquid paraffin. Then, 22.64Kg of SH-520 (a 50wt% aqueous polyvinyl acetate emulsion, a product of Showa Kohbunshi Co.Ltd.) were sprayed over the solid pesticide particles to thereby coat the solid pesticide particles with polyvinyl acetate, during which the temperature on the surface of the solid pesticide particles was kept at about 25°C. Subsequently, 0.57Kg of talc were added to the solid pesticide particles, and the coated solid pesticide particles were taken out of the drum, thereby obtaining a coated solid pesticide (the "coated solid pesticide 3"). The coated solid pesticide 3 is characterized as follows:
- thickness of the layer formed on the surface of solid pesticide particles: 20 µm
- content of solid pesticide particle 3 : 87.5w/wt%
- liquid paraffin content: 2w/w%
- polyvinyl acetate content: 10w/wt%
- talc content: 0.5w/wt%

### Example 4: Coating of solid pesticide particles 1

64.3Kg of the solid pesticide particles 1 prepared in 1(1) above were charged in the drum of Dria Coater DRC-1200DS (a pan coater manufactured by Powrex Corporation) equipped with a spraying nozzle, an air inlet and an air outlet, then, operational conditions were selected as follows:
- drum rotation speed: 12rpm
- spray rate: 250ml/min
- air blow rate: 30m³/min
- inlet temperature of air blown: 40°C

After the operational conditions were adjusted as stated above, 2.26Kg of Moresco White P-70 (liquid paraffin, a product of Matsumura Oil Co.Ltd.) were homogeneously sprayed over the solid pesticide particles to thereby coat the solid pesticide particles with liquid paraffin. Then, 87. 3Kg of SH-520 (a 50wt% aqueous polyvinyl acetate emulsion, a product of Showa Kohbunshi Co.Ltd.) were sprayed over the solid pesticide particles to thereby coat the solid pesticide particles with polyvinyl acetate, during which the temperature on the surface of the solid pesticide particles was kept at about 25°C. Thereafter, 2.24Kg of AP2675E (a 50wt% aqueous polyacrylate emulsion, a product of Showa Kohbunshi Co.Ltd.) were sprayed over the above coated solid pesticide particles 1. AP2675E was used optionally after dilution with water. Subsequently, 0.57Kg of talc were added to the solid pesticide particles, and the coated solid pesticide particles were taken out of the drum, thereby obtaining a coated solid pesticide (the "coated solid pesticide 1a"). The coated solid pesticide 1a is characterized as follows:
- thickness of the layer formed on the surface of solid pesticide particles: 120 µm
- content of solid pesticide particles 1 : 57.5w/wt%
- liquid paraffin content: 2w/w%
- polyvinyl acetate content: 39w/wt%
- polyacrylate: 1w/wt%
- talc content: 0.5w/wt%

### Example 5: Coating of solid pesticide particles 1

64.3Kg of the solid pesticide particles 1 prepared in 1 (1) above were charged in the drum of Dria Coater DRC-1200DS (a pan coater manufactured by Powrex Corporation) equipped with a spraying nozzle, an air inlet and an air outlet, then, operational conditions were selected as follows:
- drum rotation speed: 12rpm
- spray rate: 250ml/min
- air blow rate: 30m³/min
- inlet temperature of air blown: 40°C

After the operational conditions were adjusted as stated above, 2.26Kg of Moresco White P-70 (liquid paraffin, a product of Matsumura Oil Co.Ltd.) were homogeneously sprayed over the solid pesticide particles to thereby coat the solid pesticide particles with liquid paraffin. Then, 78.3 Kg of SH-520 (a 50wt% aqueous polyvinyl acetate emulsion, a product of Showa Kohbunshi Co.Ltd.) were sprayed over the solid pesticide particles to thereby coat the solid pesticide particles with polyvinyl acetate, during which the temperature on the surface of the solid pesticide particles was kept at about 25°C. Thereafter, a suspension mixture comprising 4.48 Kg of AP2675E (a 50wt% aqueous polyacrylate emulsion, a product of Showa Kohbunshi Co.Ltd.), 3.35 Kg of talc and 17.9 Kg of water was sprayed over the above coated solid pesticide particles 1. Thereby, a coated solid pesticide was obtained (the "coated solid pesticide 1b"). The coated solid pesticide 1b is characterized as follows:
- thickness of the layer formed on the surface of solid pesticide particles: 120 µm
- content of solid pesticide particles 1 : 57.5w/wt%
- liquid paraffin content: 2w/w%
- polyvinyl acetate content: 35w/wt%
- polyacrylate: 2w/wt%
- talc content: 3.5w/wt%

### Example 5(A): Coating of solid pesticide particles 1

64.3Kg of the solid pesticide particles 1 prepared in 1(1) above were charged in the drum of Dria Coater DRC-1200DS (a pan coater manufactured by Powrex Corporation) equipped with a spraying nozzle, an air inlet and an air outlet, then, operational conditions were selected as follows:
- drum rotation speed: 12rpm
- spray rate: 250ml/min
- air blow rate: 30m3/min
- inlet temperature of air blown: 40°C

After the operational conditions were adjusted as stated above, 2.26Kg of Moresco White P-70 (liquid paraffin, a product of Matsumura Oil Co.Ltd.) were homogeneously sprayed over the solid pesticide particles to thereby coat the solid pesticide particles with liquid paraffin. Then, 78.3 Kg of SH-520 (a 50wt% aqueous polyvinyl acetate emulsion, a product of Showa Kohbunshi Co.Ltd.) were sprayed over the solid pesticide particles to thereby coat the solid pesticide particles with polyvinyl acetate, during which the temperature on the surface of the solid pesticide particles was kept at about 25oC. Thereafter, a suspension mixture comprising 4.48 Kg of AP2675E (a 50wt% aqueous polyacrylate emulsion, a product of Showa Kohbunshi Co.Ltd.), 3.11 Kg of talc and 17.9 Kg of water was sprayed over the above coated solid pesticide particles 1. Thereby, a coated solid pesticide was obtained (the "coated solid pesticide A"). The coated solid pesticide A is characterized as follows:
- thickness of the layer formed on the surface of solid pesticide particles: 120 µm
- content of solid pesticide particles 1 : 57.65w/wt%
- liquid paraffin content: 2.00w/w%
- polyvinyl acetate content: 35.09w/wt%
- polyacrylate: 2.00w/wt%
- talc content: 3.26w/wt%

### Example 5(B): Coating of solid pesticide particles 2

60.5Kg of the solid pesticide particles 2 prepared in 1(2) above were charged in the drum of Dria Coater DRC-1200DS (a pan coater manufactured by Powrex Corporation) equipped with a spraying nozzle, an air inlet and an air outlet, then, operational conditions were selected as follows:
- drum rotation speed: 12rpm
- spray rate: 250ml/min
- air blow rate: 30m3/min
- inlet temperature of air blown: 40°C

After the operational conditions were adjusted as stated above, 2.0Kg of Moresco White P-70 (liquid paraffin, a product of Matsumura Oil Co.Ltd.) were homogeneously sprayed over the solid pesticide particles to thereby coat the solid pesticide particles with liquid paraffin. Then, 64.0 Kg of SH-520 (a 50wt% aqueous polyvinyl acetate emulsion, a product of Showa Kohbunshi Co.Ltd.) were sprayed over the solid pesticide particles to thereby coat the solid pesticide particles with polyvinyl acetate, during which the temperature on the surface of the solid pesticide particles was kept at about 25oC. Thereafter, a suspension mixture comprising 4.0 Kg of AP2675E (a 50wt% aqueous polyacrylate emulsion, a product of Showa Kohbunshi Co.Ltd.), 3.25 Kg of talc and 17.9 Kg of water was sprayed over the above coated solid pesticide particles 1. Thereby, a coated solid pesticide was obtained (the "coated solid pesticide A"). The coated solid pesticide 1 b is characterized as follows:
- thickness of the layer formed on the surface of solid pesticide particles: 100 µm
- content of solid pesticide particles 1 : 60.66w/wt%
- liquid paraffin content: 2.00w/w%
- polyvinyl acetate content: 32.08w/wt%
- polyacrylate: 2.00w/wt%
- talc content: 3.26w/wt%

### Example 5(C): Coating of solid pesticide particles

283.5Kg of the solid pesticide particles 3 prepared in 1(3) above were charged in the drum of Dria Coater DRC-1200DS (a pan coater manufactured by Powrex Corporation) equipped with a spraying nozzle, an air inlet and an air outlet, then, operational conditions were selected as follows:
- drum rotation speed: 12rpm
- spray rate: 250ml/min
- air blow rate: 30m3/min
- inlet temperature of air blown: 40°C

After the operational conditions were adjusted as stated above, 2.0Kg of Moresco White P-70 (liquid paraffin, a product of Matsumura Oil Co.Ltd.) were homogeneously sprayed over the solid pesticide particles to thereby coat the slid pesticide particles with liquid paraffin. Then, 18.0 Kg of SH-520 (a 50wt% aqueous polyvinyl acetate emulsion, a product of Showa Kohbunshi Co.Ltd.) were sprayed over the solid pesticide particles to thereby coat the solid pesticide particles with polyvinyl acetate, during which the temperature on the surface of the solid pesticide particles was kept at about 25oC. Thereafter, a suspension mixture comprising 4.0Kg of AP2675E (a 50wt% aqueous polyacrylate emulsion, a product of Showa Kohbunshi Co.Ltd.), 3.25 Kg of talc and 17.9 Kg of water was sprayed over the above coated solid pesticide particles 1. Thereby, a coated solid pesticide was obtained (the "coated solid pesticide C"). The coated solid pesticide C is characterized as follows:
- content of solid pesticide particles 1 : 83.72w/wt%
- liquid paraffin content: 2.00w/w%
- polyvinyl acetate content: 9.02w/wt%
- polyacrylate: 2.00w/wt%
- talc content: 3.26w/wt%

### Example 5(D): Preparation of a composition D comprising the coated granules A, B and C

The separately prepared coated pesticide granules A, B and C exemplified above, and Aerosil 200 (hydrophilic silica - a product of Nippon Aerosil Co., Ltd.) are charged into a concrete mixer in a weight ratio of 99.75 : 99.75 : 99.75 : 0.75 and admixed, to thereby give the targeted composition of the instant invention. The final content of hydrophilic silica in the composition D is 0.25w/wt%.

The composition D according to the invention allows to obtain a release controlled granule pesticide formulation in which the coated pesticide granules A and B are slow-releasing coated pesticide granules and C are fast-releasing coated pesticide granules.

### Example 6: Coating of solid pesticide particles 1

64.3Kg of the solid pesticide particles 1 prepared in 1(1) above were charged in the drum of Dria Coater DRC-1200DS (a pan coater manufactured by Powrex Corporation) equipped with a spraying nozzle, an air inlet and an air outlet, then, operational conditions were selected as follows:
- drum rotation speed: 12rpm
- spray rate: 250ml/min
- air blow rate: 30m³/min
- inlet temperature of air blown: 40°C

After the operational conditions were adjusted as stated above, 2.26Kg of Moresco White P-70 (liquid paraffin, a product of Matsumura Oil Co.Ltd.) were homogeneously sprayed over the solid pesticide particles to thereby coat the solid pesticide particles with liquid paraffin. Then, 85.0Kg of SH-520 (a 50wt% aqueous polyvinyl acetate emulsion, a product of Showa Kohbunshi Co.Ltd.) were sprayed over the solid pesticide particles to thereby coat the solid pesticide particles with polyvinyl acetate, during which the temperature on the surface of the solid pesticide particles was kept at about 25°C. Thereafter, a emulsion of 22.36Kg of US-200 (a 20wt% aqueous polyacrylate emulsion, a product of Kindai Chemical Industires Co.,Ltd.), was sprayed over the above coated solid pesticide particles 1. A powder 0.56 kg of Aerosil 200 (hydrophilic silica, a product of Nippon Aerosil Co.,Ltd) was mixed with the above coated solid pestcide particles1. Thereby, a coated solid pesticide was obtained (the "coated solid pesticide 1c"). The coated solid pesticide 1c is characterized as follows:
- thickness of the layer formed on the surface of solid pesticide particles: 120 µm
- content of solid pesticide particles 1 : 57.5w/wt%
- liquid paraffin content: 2w/w%
- polyvinyl acetate content: 38w/wt%
- polyacrylate: 2w/wt%
- hydrophilic silica content: 0.5w/wt%

### Example 7: Coating of solid pesticide particles 1

64.3Kg of the solid pesticide particles 1 prepared in 1(1) above were charged in the drum of Dria Coater DRC-1200DS (a pan coater manufactured by Powrex Corporation) equipped with a spraying nozzle, an air inlet and an air outlet, then, operational conditions were selected as follows:
- drum rotation speed: 12rpm
- spray rate: 250ml/min
- air blow rate: 30m³/min
- inlet temperature of air blown: 40°C

After the operational conditions were adjusted as stated above, 2.26Kg of Moresco White P-70 (liquid paraffin, a product of Matsumura Oil Co.Ltd.) were homogeneously sprayed over the solid pesticide particles to thereby coat the solid pesticide particles with liquid paraffin. Then, 85.0Kg of SH-520 (a 50wt% aqueous polyvinyl acetate emulsion, a product of Showa Kohbunshi Co.Ltd.) were sprayed over the solid pesticide particles to thereby coat the solid pesticide particles with polyvinyl acetate, during which the temperature on the surface of the solid pesticide particles was kept at about 25°C. Thereafter, a solution of 16.75 kg of Max 1000(as 20 wt % solution, dextrin, a product of Matsutani Chemical Industry Co., Ltd), was sprayed over the above coated solid pesticide particles 1. A powder 0.56 kg of Aerosii 200 (hydrophilic silica, a product of Nippon Aerosil Co.,Ltd) was mixed with the above coated solid pestcide particles1. Thereby, a coated solid pesticide was obtained (the "coated solid pesticide 1d"). The coated solid pesticide 1d is characterized as follows:
- thickness of the layer formed on the surface of solid pesticide particles: 120 µm
- content of solid pesticide particles 1 : 57.5w/wt%
- liquid paraffin content: 2w/w%
- polyvinyl acetate content: 37w/wt%
- dextrin: 3w/wt%
- hydrophilic silica: 0.5w/wt%

### Example 8: Coating of solid pesticide particles

The pesticide formulation according to this example is prepared by the following steps:
a) charging the solid pesticide formulation into the drum of a pan coater equipped with at least one spraying nozzle
b) adding a hydrophobic liquid selected from the group consisting of olive oil, palm oil, soybean oil and liquid paraffin to coat the solid pesticide particles therewith through said spraying nozzle or otherwise;
c) spraying a mixture comprising at least one solvent and polyvinyl acetate emulsified; and
d) spraying a mixture comprising at least one solvent, polyvinyl acetate emulsified and at least one powdered solids,
e) optinally adding at least one of said powdered solid to cover the coated pesticide formulation therewith.

### Example 9: Coating of solid pesticide particles

The pesticide formulation according to this example is prepared by the following steps:
a) charging the solid pesticide formulation into the drum of a pan coater equipped with at least one spraying nozzle;
b) adding a hydrophobic liquid selected from the group consisting of olive oil, palm oil, soybean oil and liquid paraffin to coat the solid pesticide particles therewith through said spraying nozzle or otherwise;
c) spraying a mixture comprising at least one solvent, polyvinyl acetate emulsified and at least one powdered solids;
d) optionally adding at least one of said powdered solid to cover the coated pesticide formulation therewith.

### Example 10: Coating of solid pesticide particles

The pesticide formulation according to this example is prepared by the following steps:
a) charging the solid pesticide formulation into the drum of a pan coater equipped with at least one spraying nozzle;
b) adding a hydrophobic liquid selected from the group consisting of olive oil, palm oil, soybean oil and liquid paraffin to coat the solid pesticide particles therewith through said spraying nozzle or otherwise;
c) spraying a mixture comprising at least one solvent, polyacrylate emulsified and at least one powdered solids;
d) optinally adding at least one of said powdered solid to cover the coated pesticide formulation therewith.

### Example 11: Coating of solid pesticide particles 4

91.50Kg of the solid pesticide particles 4 prepared in 1(4) above were charged in the drum of Dria Coater DRC-1200DS (a pan coater manufactured by Powrex Corporation) equipped with a spraying nozzle and an air inlet and an air outlet, then, operational conditions were selected as follows:
- drum rotation speed: 12rpm
- spray rate: 250ml/min
- air blow rate: 30m3/min
- inlet temperature of air blown: 40°C

After the operational conditions were adjusted as stated above, 2.06Kg of Moresco White P-70 (liquid parafine, a product of Matsumura Oil Co.Ltd.) were homogeneously sprayed over the solid pesticide particles to thereby coat the solid pesticide particles with liquid parafine. Then, 10.00Kg of SH-520 (a 50wt% aqueous polyvinyl acetate emulsion, a product of Showa Kohbunshi Co.Ltd) were sprayed over the solid pesticide particles to thereby coat the solid pesticide particles with polyvinyl acetate, during which the temperature on the surface of the solid pesticide particles was kept at about 25°C. Subsequently, Thereafter, 2.0Kg of AP2675E (a 50wt% aqueous polyacrylate emulsion, a product of Showa Kohbunshi Co.Ltd.) were sprayed after diluted with water over the above coated solid pesticide particles. Subsequently, 0.50Kg of talc were added to the solid pesticide particles, and the coated solid pesticide particles were taken out of the drum, thereby obtaining a pesticidal formulation of the instant invention (the "coated solid pesticide 4"), which is characterized as follows:
- thickness of the layer formed on the surface of solid pesticide particles: 120µm
- content of solid pesticide particles 4: 91.5w/wt%
- liquid parafine content: 2w/w%
- polyvinyl acetate content: 5w/wt%
- polyacrylate content: 1 w/wt%
- talc content: 0.5w/wt%

### Example 12: Coating of solid pesticide particles 5

82.50Kg of the solid pesticide particles 5 prepared in 1 (5) above were charged in the drum of Dria Coater DRC-1200DS (a pan coater manufactured by Powrex Corporation) equipped with a spraying nozzle, an air inlet and an air outlet, then, operational conditions were selected as follows:
- drum rotation speed: 12rpm
- spray rate: 250ml/min
- air blow rate: 30m3/min
- inlet temperature of air blown: 40°C

After the operational conditions were adjusted as stated above, 2.00Kg of Moresco White P-70 (liquid parafine, a product of Matsumura Oil Co.Ltd.) were homogeneously sprayed over the solid pesticide particles to thereby coat the solid pesticide particles with liquid parafine. Then, 28.00Kg of SH-520 (a 50wt% aqueous polyvinyl acetate emulsion, a product of Showa Kobunshi Co.Ltd.) were sprayed over the solid pesticide particles to thereby coat the solid pesticide particles with polyvinyl acetate, during which the temperature on the surface of the solid pesticide particles was kept at about 25o°C. Thereafter, 2.0Kg of AP2675E (a 50wt% aqueous polyacrylate emulsion, a product of Showa Kohbunshi Co.Ltd.) were sprayed after diluted with water over the above coated solid pesticide particles. Subsequently, 0.504Kg of talc were added to the solid pesticide particles, and the coated solid pesticide particles were taken out of the drum, thereby obtaining a pesticidal formulation of the instant invention (the "coated solid pesticide 5"), which is characterized as follows:
- thickness of the layer formed on the surface of solid pesticide particles: 90µm
- content of solid pesticide particles 5: 82.5w/wt%
- liquid parafine content: 2w/w%
- polyvinyl acetate content: 14w/wt%
- polyacrylate content: 1w/wt%
- talc content: 0.5w/wt%

### Example 13: Preparation of a composition E comprising the coated solid pesticide 4 and 5

The coated solid pesticide 4 and 5 prepared above respectively in 1 (4) and in 1 (5), were admixed in a weight ratio of 1:1. The composition E contains 16.5w/wt% of Pyroquilon and 3.1w/wt% of Thiamethoxam as active ingredients.

### Example 14: Release control test of coated solid pesticide

1000ml of water having a German hardness of 3 degrees were placed in a 1000ml stopped flask, to which 2.5g of the coated solid pesticide 3 prepared in Example 3 above were added. The temperature of said water was kept at 25 +-2°C. If some granules are floating on the surface of the water, they are sunk down to the bottom of the flask.

On the 1^{st}, 3^{rd}, 7^{th}, 14^{th} and 28^{th} day after preparation of the above test system, 10ml of the liquid were pipetted therefrom using a 10ml hole pipette, then transferred into a stopped centrifugation tube. When pipetting the liquid, the tip of the hole pipette was positioned at the medium point between the surface of the liquid and the bottom of the flask. After pipetting the liquid, 10ml of water having a German hardness of 3 degrees are added to the test system. If some granules were floating or flocculating in the liquid transferred to the centrifugation tube, it is centrifuged in order to sediment the granules. The liquid transferred into the centrifugation tube was then subject to HPLC and/or GLC analysis in order to determine the the cumulative release amount (in %) of both active ingredients. The results are as follows:

| Pyroquilon: | |
|---|---|
| Day | Cumulative release amount |
| On the1^{st} day: | 35.3% |
| On the 3^{rd} day: | 82.3% |
| On the 7^{th} daty: | 95.4% |

| Thiamethoxam: | |
|---|---|
| Day | Cumulative release amount |
| On the 1^{st} day: | 7.9% |
| On the 3^{rd} day: | 21.7% |
| On the 7^{th} day: | 34.2% |
| On the 14^{th} day: | 56.1% |
| On the 28^{th} day: | 89.2% |

### Example 15: Release control test of coated solid pesticide

1000ml of water having a German hardness of 3 degrees were placed in each of two 1000ml stopped flasks, to which 2.5g of the coated solid pesticide 1 a prepared in Example 4 above or 2.5g of the coated solid pesticide 2 prepared in Example 2 above were added. The temperature of said water was kept at 25 +-2°C. If some granules are floating on the surface of the water, they are sunk down to the bottom of the flask.

On the 7^{th}, 14^{th}, 21^{st}, 30^{th}, 60^{th}, 70^{th} and 80^{th} day after preparation of the above test system, 10ml of the liquid were pipetted therefrom using a 10ml hole pipette, then transferred into a stopped centrifugation tube. When pipetting the liquid, the tip of the hole pipette was positioned at the medium point between the surface of the liquid and the bottom of the flask. After pipetting the liquid, 10ml of water having a German hardness of 3 degrees are added to the test system. If some granules were floating or flocculating in the liquid transferred to the centrifugation tube, it is centrifuged in order to sediment the granules _The liquid transferred into the centrifugation tube was then subject to HPLC and/or GLC analysis in order to determine the the cumulative release amount (in %) of both active ingredients. The results are as follows:

| Pyroquilon: | |
|---|---|
| Day | Cumulative release amount |
| On the 7^{th} day: | 1.9% |
| On the 14^{th} day | 8.5% |
| On the 21^{st} day | 15.5% |
| On the 30^{th} day | 25.6% |
| On the 60^{th} day | 73.4% |
| On the 70^{th} day | 88.2% |
| On the 80^{th} day | 94.8% |

| Thiamethoxam: | |
|---|---|
| Day | Cumulative release amount |
| On the 7^{th} day: | 0.0% |
| On the 14^{th} day | 0.1% |
| On the 21 ^{st} day | 0.8% |
| On the 30^{th} day | 5.7% |
| On the 60^{th} day | 45.2% |
| On the 70^{th} day | 80.4% |
| On the 80^{th} day | 90.5% |

These results clearly demonstrate that the process according to the instant invention enables to prepare coated solid pesticides with extraordinarily well controlled release properties.

### Example 16: Release control test of coated solid pesticide

1000ml of water having a German hardness of 3 degrees were placed in a 1000ml stopped flask, to which 2.5g of the composition E prepared in Example 13 above were added. The temperature of said water was kept at 25°C +/-2°C. If some granules are floating on the surface of the water, they are sunk down to the bottom of the flask.

On the 1st, 3rd, 7th, 14th, 21st and 30th day after preparation of the above test system, 10ml of the liquid were collected from the center part of the liquid in the flask using a 10ml hole pipette, then transferred into a stopped centrifugation tube. After transfer the liquid, 10ml of water having a German hardness of 3 degrees are returned to the test system. After removal of solid matters by centrifuge, the liquid was then subject to HPLC and/or GLC analysis in order to determine the the cumulative release amount (in %) of both active ingredients. The results are as follows:

| Pyroquilon: | |
|---|---|
| Day | Cumulative release amount |
| On the 1st day: | 35.7% |
| On the 3rd day: | 81.5% |
| On the 7th day: | 100.0% |

| Thiamethoxam: | |
|---|---|
| Day | Cumulative release amount |
| On the 1 st day: | 0.1% |
| On the 3rd day: | 0.4% |
| On the 7th day: | 1.5% |
| On the 14th day: | 6.6% |
| On the 21 st day: | 26.9% |
| On the 30th day: | 66.7% |

These results clearly demonstrate that the composition E could separately release each ative ingredient from the composition at desired timing and with desired properties. For example, only one application of the composition comprising Pyroquilon and Thiamethoxam in paddy at the timig of "before-heading period" could effectively control both rice blast by quick increasing of Pyroquilon concentration in paddy water, and harmful insects such as pecky rice causing stinkbugs post-grown for long time by the long term releasing properties of Thiamethoxam.

### Example 17: Electronmicroscopic observation of the layer formed on the surface of solid pesticide particles

A granule of the coated solid pesticide 1a prepared in Example 4 above was cut into two pieces such that the cross section perpendicular to the long axis of the granule appears. The cross section was subject to electron microscopic observation. For comparison, an electonmicroscopic observation of the cross section of a granule prepared according to the method as described in PCT WO 99/01243 is also made. The electronmicroscopic observations and comparison between prior art and the instant invention, demonstrate that the layer formed on the surface of the solid pesticide particle according to the process of the instant invention is extremely uniform whilst the layer formed by the process described in WO 99/01243 has a multi-layer structure composed of thin unstable films. The process according to the instant invention allows for example the preparation of pesticidal slow release formulations with improved released properties. Overdosage of the active ingredient due to non-uniform coating, which can lead to phytotoxic damage to the crop plants, can be avoided by the use of said pesticidal slow release formulation according to the instant invention.

As described above, the process according to the instant invention enables the production of coated solid pesticides in a very simple process, without requiring any manual intervention during the operation, and yields coated solid pesticides with excellently uniform coating layers and having extraordinarily well controlled release property of active ingredients. Therefore, the process according to the instant invention is very valuable in the field of agrochemicals industry.

## Claims

1. A process for the coating of a solid pesticide formulation with thermoplastic polymers comprising the steps of
a) charging said solid pesticide formulation into the drum of a pan coater equipped with at least one spraying nozzle, with at least one gas inlet and with at least one gas outlet
b) spraying a mixture of at least one solvent and at least one thermoplastic polymer emulsified therein through said spraying nozzle during the operation of the pan coater and simultaneously blowing a gas through said gas inlet into the drum.

2. A process according to claim 1, wherein a further step aa) comprising the spraying of a hydrophobic liquid through said spraying nozzle during the operation of the pan coater is carried out between steps a) and b).

3. A process according to claim 1, wherein the mixture of at least one solvent and at least one thermoplastic polymer emulsified therein further comprises at least one powdered solid.

4. A process according to claim 1, wherein at least one further step c) comprising of the spraying of a mixture of at least one solvent and at least one thermoplastic polymer emulsified therein through said spraying nozzle during the operation of said pan coater and simultaneously blowing a gas through said gas inlet into the drum is carried out after step b).

5. A process according to claim 1, wherein at least one further step d) comprising of the spraying of a mixture of at least one solvent, at least one thermoplastic polymer emulsified therein and at least one powdered solid through said spraying nozzle during the operation of said pan coater and simultaneously blowing a gas through said gas inlet into the drum is carried out after step b).

6. A process according to claim 1, wherein at least one powdered solid is charged into the drum of said pan coater after step b).

7. A process according to claim 4, wherein at least one powdered solid is added after step c).

8. A process according to claim 5, wherein at least one powdered solid is added after step d).

9. A process according to claim 1, wherein the pesticidal active ingredient of said solid pesticide formulation is selected from the group consisting of fungicides, insecticides, herbicides and plant growth regulators.

10. Coated solid pesticide formulation produced by a process according to claim 1.

11. Coated solid pesticide formulation according to claim 10 comprising at least two solid particle formulations, said formulations each comprising at least one pesticide at least one inert carrier and at least one surfactant,
**characterized in that**
the pesticide release rates of at least two said solid particle formulations are different from each other.

12. A coated solid pesticide formulation according to claim 10, comprising Thiamethoxam as insecticidal active ingredient and Pyroquilon as fungicidal active ingredient.

13. A coated solid pesticide formulation according to claim 10, **characterized in that** if a first pesticide is completely released after application of the composition, the release rate of a second pesticide is below 50%.

14. A coated solid pesticide formulation according to claim 10, **characterized in that** if the first pesticide is completely released after application of the composition, the release rate of a second pesticide is below 10%.

15. A coated solid pesticide formulation according to claim 10, **characterized in that** if the first pesticide is completely released after application of the composition, the release rate of a second pesticide is below 2%.

16. The use of a a coated solid pesticide formulation according to claim 10 in protecting plants against infestation by phytopathogenic microorganisms and for controlling insects or representatives of the order Acarina.

17. A method of controlling and preventing an infestation of crop plants by phytopathogenic microorganisms and for controlling insects or representatives of the order Acarina, which comprises the application of a composition according to claim 1 as active ingredient to the plant, to parts of plants or to the locus thereof.

18. A method according to claim 17, wherein the phytopathogenic microorganisms are fungal organisms.

19. A method for controlling undesirable plant growth and for controlling and preventing an infestation of crop plants by phytopathogenic microorganisms, which comprises the application of a coated solid pesticide formulation according to claim 10 to the plants or to the locus thereof.

20. A method for controlling undesirable plant growth, for controlling insects or representatives of the order Acarina and for controlling and preventing an infestation of crop plants by phytopathogenic microorganisms, which comprises the application of a coated solid pesticide formulation according to claim 10 to the plants or to the locus thereof.

21. A method for controlling undesirable plant growth and for controlling insects or representatives of the order Acarina, which comprises the application of a coated solid pesticide formulation according to claim 10 to the plants or to the locus thereof.

22. The use of a pan coater for the coating of a solid pesticide formulation with thermoplastic polymers according to claim 1.

23. A coated solid pesticide formulation comprising at least two solid particle formulations, said formulations each comprising at least one pesticide at least one inert carrier and at least one surfactant,
**characterized in that**
at least one of said solid particle formulation is coated with at least one thermoplastic polymer and the pesticide release rates of at least two said solid particle formulations are different from each other.
